(19)

**Europäisches Patentamt**
**European Patent Office**
**Office européen des brevets**

(11) **EP 4 711 674 A1**

(12) **EUROPEAN PATENT APPLICATION**

(43) Date of publication:
**18.03.2026 Bulletin 2026/12**

(21) Application number: **25195928.4**

(22) Date of filing: **14.08.2025**

(51) International Patent Classification (IPC):
**F23R 3/28** $^{(2006.01)}$

(52) Cooperative Patent Classification (CPC):
**F23R 3/286; F23R 3/30;** F23R 3/46;
F23R 2900/00002

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **17.09.2024 US 202418887612**

(71) Applicant: **General Electric Company**
**Cincinnati, Ohio 45215 (US)**

(72) Inventors:
• **PEDOTA, Michael**
**West Chester, 45069 (US)**

• **PAL, Sibtosh**
**Evendale, 45241 (US)**
• **BUCARO, Michael**
**West Chester, 45069 (US)**
• **BURNETT, Miles**
**Evendale, 45241 (US)**
• **NAIK, Pradeep**
**560066 Bengaluru (IN)**
• **RANGANATHA, Narasimha Chiranthan**
**560066 Bengaluru (IN)**

(74) Representative: **Openshaw & Co.**
**8 Castle Street**
**Farnham, Surrey GU9 7HR (GB)**

(54) **INJECTOR FOR A TURBINE ENGINE**

(57) A turbine engine (10) comprising a compression section (12), combustion section (14), and turbine section (16) is serial flow arrangement, with the combustion section (14) including an injector (100) for providing a mixture of fuel and air for combustion. The injector (100) includes a body (114), an inner nozzle (102) provided within the body (114) and defining an injector axis (112), and an outer nozzle (104) in annular arrangement about the inner nozzle. (102) A first fuel passage (120) fluidly couples to the inner nozzle (102) and a second fuel passage (164) fluidly couples to the outer nozzle (104). A first set of air conduits (174) are in annular arrangement about the body (114) interior of the outer nozzle (104) and a second set of air conduits (176) are in annular arrangement about the body (114) exterior of the outer nozzle (104).

**FIG. 4**

EP 4 711 674 A1

**Description**

TECHNICAL FIELD

The present subject matter relates generally to an injector for supplying a mixture of fuel and air to a turbine engine, and more specifically, for supplying the mixture of fuel and air to a combustor for combustion to drive the turbine engine.

BACKGROUND

A gas turbine engine typically includes a fan and a turbomachine. The turbomachine generally includes an inlet, one or more compressors, a combustor, and at least one turbine. The compressors compress air which is channeled to the combustor where it is mixed with fuel. The mixture is then ignited for generating hot combustion gases. The combustion gases are channeled to the turbine(s) which extracts energy from the combustion gases for powering the compressor(s), as well as for producing useful work to propel an aircraft in flight or to power a load, such as an electrical generator.

BRIEF DESCRIPTION OF THE DRAWINGS

A full and enabling disclosure of the present disclosure, including the best mode thereof, directed to one of ordinary skill in the art, is set forth in the specification, which makes reference to the appended figures, in which:

FIG. 1 is a schematic representation of a turbine engine, the turbine engine including a compression section, a combustion section, and a turbine section, in accordance with an aspect of the present disclosure.
FIG. 2 depicts a cross-sectional view of the combustion section taken along line II-II of FIG. 1, further illustrating a set of injectors, in accordance with an aspect of the present disclosure.
FIG. 3 is a schematic of a side sectional view taken along line III-III of FIG. 2, further illustrating one injector of the set of injectors exhausting into a combustion chamber, in accordance with an aspect of the present disclosure.
FIG. 4 is a schematic, cross-sectional view of the injector of FIG. 3, in accordance with an aspect of the present disclosure.
FIG. 5 is a schematic sectional view of the injector of FIG. 4 taken along line V-V, illustrating the flows of fuel and air within the injector, in accordance with an aspect of the present disclosure.
FIG. 6 is a schematic sectional view of an injector coupled to a heat exchanger for heating a fuel provided to the injector, in accordance with an aspect of the present disclosure.
FIG. 7 is a schematic sectional view of an injector with a first fuel passage having a heating element, in accordance with an aspect of the present disclosure.
FIG. 8 is a schematic sectional view of an injector looking in the forward direction, the injector having a set of fuel outlets provided in annular arrangement about an outer nozzle, in accordance with an aspect of the present disclosure.
FIG. 9 is a schematic sectional view of an injector having a first and second inert gas plenums providing an inert gas to an outer nozzle, in accordance with an aspect of the present disclosure.
FIG. 10 is a schematic sectional view of an injector having first and second inert gas passages providing an inert gas to an outer nozzle, in accordance with an aspect of the present disclosure.
FIG. 11 is a schematic sectional view of an injector providing a mixture of air and inert gas to an outer nozzle through first and second sets of conduits, in accordance with an aspect of the present disclosure.
FIG. 12 is a schematic sectional view of an injector providing a mixture of fuel and inert gas to an outer nozzle through a second fuel passage, in accordance with an aspect of the present disclosure.
FIG. 13 is a schematic sectional view of an injector providing a mixture of fuel and inert gas to an inner nozzle through a first fuel passage, in accordance with an aspect of the present disclosure.
FIG. 14 is a schematic sectional view of an injector providing a mixture of air and inert gas to an inner nozzle through first and second passages, in accordance with an aspect of the present disclosure.
FIG. 15 is a flow chart showing a method of injective fuel to a combustor with an injector, in accordance with an aspect of the present disclosure.

DETAILED DESCRIPTION

Aspects of the disclosure herein are directed to an injector located within an engine, and more specifically, to an injector for supplying a fuel, air, inert gas, or mixtures thereof to a combustor for combustion within a turbine engine. For purposes of illustration, the present disclosure will be described with respect to an injector located within the combustor for a turbine engine. It will be understood, however, that aspects of the disclosure herein are not so limited and may have general applicability within an engine that combusts a fuel to drive the engine. This disclosure is applicable to other non-aircraft applications or other turbine environments. Non-limiting examples of where this disclosure can be applied include other mobile applications and non-mobile industrial, commercial, and residential applications.

Gaseous fuels, such as hydrogen and non-diluent hydrogen, have faster flame speeds, higher reactivity, greater flammability limits, and higher flame temperatures than that of liquid fuels or atomized liquid fuels. Such faster flame speed, higher reactivity, greater flammability, and higher flame temperatures can result in flashback, autoignition, or flame holding along portions of the injector or the surrounding environment from which the gaseous fuels are emitted. For example, a laminar flame speed for hydrogen fuel can be about 10 times that of a laminar flame speed for hydrocarbon fuels. When fuels ignite with an oxidizer (like air, for example), hydrogen fuels require less ignition energy compared with that of hydrocarbon fuels when utilized with the same oxidizer. Such flashback, autoignition, or flame holding can impact durability of the injector. The injector described herein is capable of utilizing low-emission fuels with higher flame speeds, as well as achieving mixing of the fuel and air to ensure low pressure drop and reduce, mitigate, or eliminate the opportunity for flashback, flame holding, and autoignition at the injector.

Additionally, aspects of the disclosure herein provide an injector capable of use or incorporation of low emission fuels, such as hydrogen fuels or fuels that are capable of zero emissions, zero carbon emissions, near-zero emissions, or near-zero carbon emissions. In a non-limiting example, such a fuel can be a pure form of hydrogen without any diluents, or a non-diluent hydrogen gas fuel. In some examples, no diluent is added to the hydrogen fuel and the fuel is substantially completely diatomic hydrogen without diluent. As used herein, the term "substantially completely," as used to describe the amount of a particular element or molecule (e.g., diatomic hydrogen), refers to at least 99% by mass of the described portion of the element or molecule, such as at least 97.5%, such as at least 95%, such as at least 92.5%, such as at least 90%, such as at least 85%, or such as at least 75% by mass of the described portion of the element or molecule.

The turbine engine and the injector, as described herein, are especially well adapted for the use of hydrogen fuel (hereinafter, "H2 fuel"). Specifically, the turbine engine is especially well adapted to feed a flow of H2 fuel to the combustion chamber. The flow of H2 fuel can include a gaseous H2 fuel, a liquid H2 fuel, or a combination thereof. The flow of H2 fuel can further be mixed with other fuels or fluids such as, but not limited to, natural gas, syngas, coke oven gas, diesel, Jet-A, or the like. H2 fuels, when compared to traditional fuels (e.g., carbon fuels, petroleum fuels, etc.), have a higher burn temperature and velocity. Further, the H2 fuel, once fed to the combustion chamber, spreads out faster than traditional fuels. Ensuring that the H2 fuel has a desired momentum, mixture, or flow rate when being fed to the combustion chamber ensures that the H2 fuel does not ignite early or spread to undesired regions. The injector described herein permits suitable intermixing of H2 fuel and air to mitigate or prevent flame holding at the injector or flashback.

As used herein, the term "gaseous fuel" or iterations thereof refers to a combustible fuel in a gaseous state. It will be appreciated that gaseous fuel is different from atomized fuel. Atomized fuel utilizes an impeller, orifices, or the like to take a liquid fuel and atomize the liquid fuel into very small droplets.

For purposes of illustration, the present disclosure will be described with respect to a turbine engine (gas turbine engine). It will be understood, however, that aspects of the disclosure described herein are not so limited and that a combustion section and fuel supply as described herein can be implemented in engines, including but not limited to, turbojet, turboprop, turboshaft, and turbofan engines. Aspects of the disclosure discussed herein may have general applicability within non-aircraft engines having a combustion section and fuel supply, such as other mobile applications and non-mobile industrial, commercial, and residential applications.

The word "exemplary" is used herein to mean "serving as an example, instance, or illustration." Any implementation described herein as "exemplary" is not necessarily to be construed as preferred or advantageous over other implementations. Additionally, unless specifically identified otherwise, all embodiments described herein should be considered exemplary.

As used herein, the terms "first," "second," "third," "fourth," "fifth," and "sixth" may be used interchangeably to distinguish one component from another and are not intended to signify location or importance of the individual components.

The terms "forward" and "aft" refer to relative positions within a turbine engine or vehicle and refer to the normal operational attitude of the turbine engine or vehicle. For example, with regard to a turbine engine, forward refers to a position closer to an engine inlet and aft refers to a position closer to an engine exhaust.

As used herein, the term "upstream" refers to a direction that is opposite the fluid flow direction, and the term "downstream" refers to a direction that is in the same direction as the fluid flow.

The term "fluid" may be a gas or a liquid. The term "fluidly coupled" means that a fluid is capable of making the connection between the areas specified.

Additionally, as used herein, the terms "radial" or "radially" refer to a direction away from a common center. For example, in the overall context of a turbine engine, radial refers to a direction along a ray extending between a center longitudinal axis of the engine and an outer engine circumference.

All directional references (e.g., radial, axial, proximal, distal, upper, lower, upward, downward, left, right, lateral, front, back, top, bottom, above, below, vertical, horizontal, clockwise, counterclockwise, upstream, downstream, forward, aft, etc.) are only used for identification purposes to aid the reader's understanding of the present disclosure, and do not create limitations, particularly as to the position, orientation, or use of aspects of the disclosure described herein. Connection references (e.g., attached, coupled, connected, and joined) are to be construed broadly and can include intermediate structural elements between a collection of elements and relative movement between elements unless otherwise indicated. As such, connection references do not necessarily infer that two elements are directly connected and in fixed relation to one another. The exemplary drawings are for purposes of illustration only and the dimensions, positions, order and relative sizes reflected in the drawings attached hereto can vary.

The singular forms "a," "an," and "the" include plural references unless the context clearly dictates otherwise. Furthermore, as used herein, the term "set" or a "set" of elements can be any number of elements, including only one.

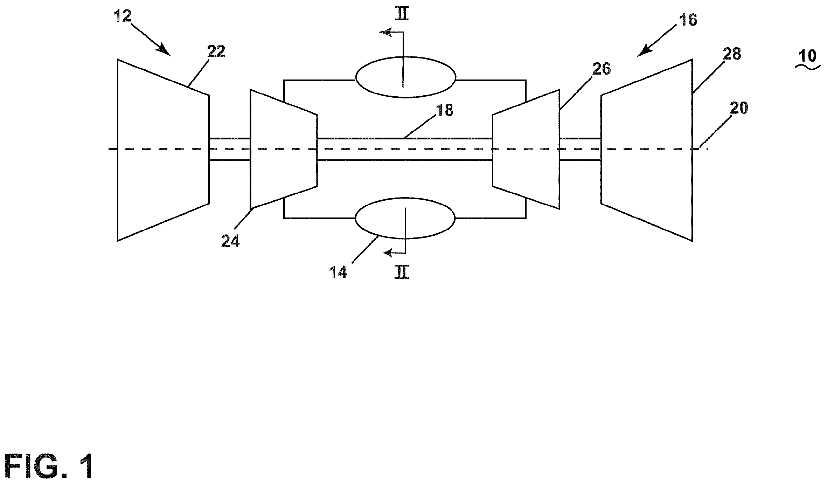

FIG. 1 is a schematic view of a turbine engine 10. As a non-limiting example, the turbine engine 10 can be used within an aircraft. The turbine engine 10 includes, at least, a compression section 12, a combustion section 14, and a turbine section 16 in serial flow arrangement. A drive shaft 18 rotationally couples the compression section 12 and the turbine section 16, such that rotation of one affects the rotation of the other and defines a rotational axis or engine centerline 20 for the turbine engine 10.

The compression section 12 can include a low-pressure (LP) compressor 22, and a high-pressure (HP) compressor 24 serially fluidly coupled to one another. The turbine section 16 can include an LP turbine 28, and an HP turbine 26 serially fluidly coupled to one another. The drive shaft 18 operatively couples the LP compressor 22, the HP compressor 24, the LP turbine 28 and the HP turbine 26 together. Additionally, it is contemplated that the drive shaft 18 can include an LP drive shaft (not shown) and an HP drive shaft (not shown). The LP drive shaft couples the LP compressor 22 to the LP turbine 28, and the HP drive shaft couples the HP compressor 24 to the HP turbine 26. An LP spool is defined as the combination of the LP compressor 22, the LP turbine 28, and the LP drive shaft such that the rotation of the LP turbine 28 applies a driving force to the LP drive shaft, which in turn rotates the LP compressor 22. An HP spool is defined as the combination of the HP compressor 24, the HP turbine 26, and the HP drive shaft such that the rotation of the HP turbine 26 applies a driving force to the HP drive shaft which in turn rotates the HP compressor 24.

The compression section 12 includes a plurality of axially spaced stages. Each stage includes a set of circumferentially spaced rotating blades and a set of circumferentially spaced stationary vanes. The compressor blades for a stage of the compression section 12 can be mounted to a disk, which is mounted to the drive shaft 18. Each set of blades for a given stage can have its own disk. The vanes of the compression section 12 can be mounted to a casing which can extend circumferentially about the turbine engine 10. It will be appreciated that the representation of the compression section 12 is merely schematic and that there can be any number of stages. Further, it is contemplated that there can be any other number of components within the compression section 12.

Similar to the compression section 12, the turbine section 16 includes a plurality of axially spaced stages, with each stage having a set of circumferentially spaced, rotating blades and a set of circumferentially spaced, stationary vanes. The turbine blades for a stage of the turbine section 16 can be mounted to a disk which is mounted to the drive shaft 18. Each set of blades for a given stage can have its own disk. The vanes of the turbine section 16 can be mounted to the casing in a circumferential manner. It is noted that there can be any number of blades, vanes and turbine stages as the illustrated turbine section is merely a schematic representation. Further, it is contemplated that there can be any other number of components within the turbine section 16.

The combustion section 14 is provided serially between the compression section 12 and the turbine section 16. The combustion section 14 is fluidly coupled to at least a portion of the compression section 12 and the turbine section 16 such that the combustion section 14 at least partially fluidly couples the compression section 12 to the turbine section 16. As a non-limiting example, the combustion section 14 can be fluidly coupled to the HP compressor 24 at an upstream end of the combustion section 14 and to the HP turbine 26 at a downstream end of the combustion section 14.

During operation of the turbine engine 10, ambient or atmospheric air is drawn into the compression section 12 via a fan (not illustrated) upstream of the compression section 12, where the air is compressed defining a compressed air. The compressed air then flows into the combustion section 14 where the compressed air is mixed with fuel and ignited, thereby generating combustion gases. Some work is extracted from these combustion gases by the HP turbine 26, which drives the HP compressor 24. The combustion gases are discharged into the LP turbine 28, which extracts additional work to drive the LP compressor 22, and the exhaust gas is ultimately discharged from the turbine engine 10 via an exhaust section (not illustrated) downstream of the turbine section 16. The driving of the LP turbine 28 drives the LP spool to rotate the fan (not illustrated) and the LP compressor 22. The compressed air flow and the combustion gases can together define a working air flow that flows through the fan, compression section 12, combustion section 14, and turbine section 16 of the turbine engine 10.

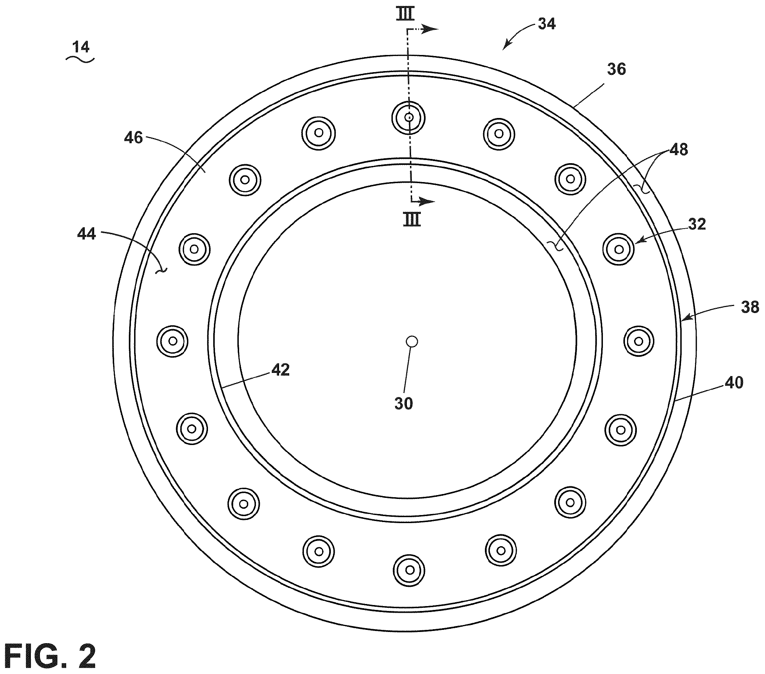

FIG. 2 depicts a cross-sectional view of the combustion section 14 along line II-II of FIG. 1. For purposes of illustration, the drive shaft 18 (FIG. 1) has been removed. The combustion section 14 includes a combustor 34. The combustor 34 includes a dome wall 44 including a set of injectors 32 in annular arrangement about a combustor centerline 30. In a non-limiting example, the set of injectors 32 can be TAPS style injectors. The combustor centerline 30 can be the engine centerline 20 (FIG. 1) of the turbine engine 10 (FIG. 1). Additionally, or alternatively, the combustor centerline 30 can be a centerline for the combustion section 14, a single combustor, or a set of combustors that are arranged about the combustor centerline 30.

The set of injectors 32 can include rich cups, lean cups, or a combination of both rich and lean cups. It should be appreciated that the annular arrangement of the set of injectors 32 can include any number of injectors, including one or multiple injectors, and one or more of the injectors can have similar or different characteristics. The combustor 34 is defined, at least in part, by a combustor liner 38. The combustor 34 can have a can, can-annular, or annular arrangement depending on the type of engine in which the combustor 34 is located. In a non-limiting example, the combustor 34 can have a combination arrangement as further described herein located within a casing 36 of the engine. The combustor liner 38, as illustrated by way of example, can be annular. The combustor liner 38 can include an outer combustor liner 40 and an inner combustor liner 42 concentric with respect to each other and annular about the engine centerline. The dome wall 44 together with the combustor liner 38 can define a combustion chamber 46 having an annular configuration disposed about the combustor centerline 30. The set of injectors 32 can be fluidly coupled to the combustion chamber 46. A compressed air passageway 48 can be defined at least in part by both the combustor liner 38 and the casing 36.

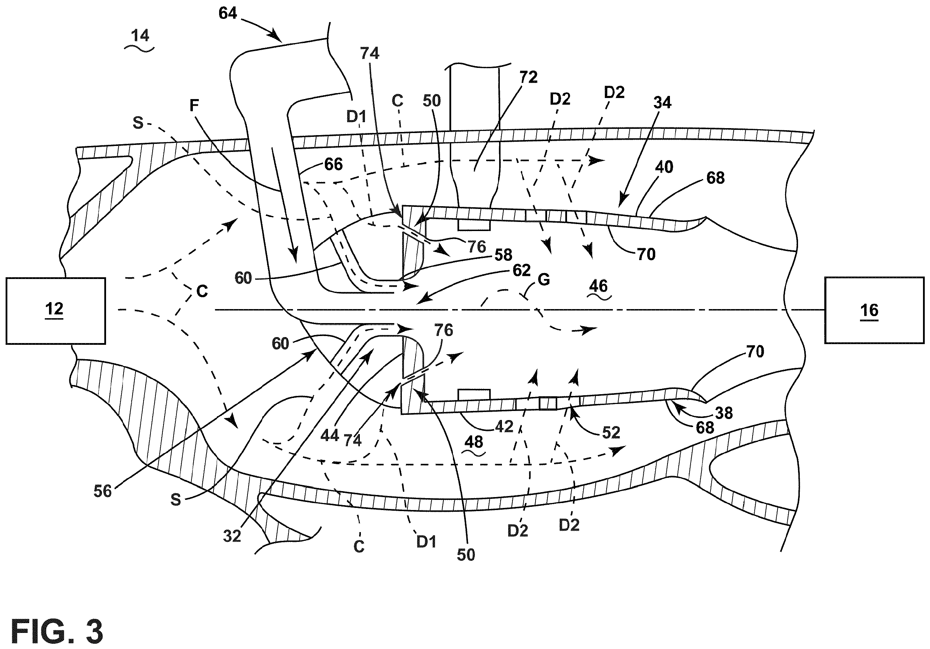

FIG. 3 depicts a cross-section view taken along line III-III of FIG. 2 illustrating the combustion section 14 between the compression section 12 and the turbine section 16. At least one flame shaping passage can fluidly connect compressed air and the combustion chamber 46. By way of example, the at least one flame shaping passage is illustrated as first set of flame shaping holes 50 or second set of flame shaping holes 52. The combustor 34 can include the first set of flame shaping holes 50, the second set of flame shaping holes 52, or both the first set of flame shaping holes 50 and the second set of flame shaping holes 52.

The first set of flame shaping holes 50 pass through the dome wall 44, fluidly coupling compressed air (C) from the compression section 12 or the compressed air passageway 48 to the combustion chamber 46. The second set of flame shaping holes 52 pass through the combustor liner 38, fluidly coupling compressed air from the compressed air passageway 48 to the combustion chamber 46.

Each injector of the set of injectors 32 can be coupled to and disposed within a dome assembly 56. Each injector of the set of injectors 32 can include a flare cone 58 and a swirler 60. The flare cone 58 includes an outlet 62 directly fluidly coupled to the combustion chamber 46. Each injector of the set of injectors 32 is fluidly coupled to a fuel inlet 64 via a passageway 66.

Both the inner combustor liner 42 and the outer combustor liner 40 have an outer surface 68 and an inner surface 70 at least partially defining the combustion chamber 46. The combustor liner 38 can be made of one continuous monolithic portion or be multiple monolithic portions assembled together to define the inner combustor liner 42 and the outer combustor liner 40. By way of non-limiting example, the outer surface 68 can define a first piece of the combustor liner 38 while the inner surface 70 can define a second piece of the combustor liner 38 that when assembled together form the combustor liner 38. As described herein, the combustor liner 38 includes the second set of flame shaping holes 52. It is further contemplated that the combustor liner 38 can be any type of combustor liner 38, including but not limited to a single wall or a double walled liner or a tile liner. An ignitor 72 can be provided at the combustor liner 38 and fluidly coupled to the combustion chamber 46, at any location, by way of non-limiting example upstream of the second set of flame shaping holes 52.

During operation, compressed air (C) from a compressed air supply, such as the LP compressor 22 or the HP compressor 24 of FIG. 1, can flow from the compression section 12 to the combustor 34. A portion of the compressed air (C) can flow through the dome assembly 56. A first part of the compressed air (C) flowing through the dome assembly 56 can be fed to each injector of the set of injectors 32 via the swirler 60 as a swirled airflow (S). A flow of fuel (F) is fed to each injector of the set of injectors 32 via the fuel inlet 64 and the passageway 66. The swirled airflow (S) and the flow of fuel (F) are mixed at the flare cone 58 and fed to the combustion chamber 46 as a fuel/air mixture. The ignitor 72 can ignite the fuel/air mixture to define a flame within the combustion chamber 46, which generates a combustion gas (G). While shown as starting axially downstream of the outlet 62, it will be appreciated that the fuel/air mixture can be ignited at or near the outlet 62.

A second part of the compressed air (C) flowing through one or more portions of the dome assembly 56 can be fed to the first set of flame shaping holes 50 as a first flame shaping airflow (D1). That is, a portion of the compressed air (C) from the compression section 12 can flow through the dome wall 44 and into the combustion chamber 46 by passing through the first set of flame shaping holes 50. An inlet 74 is defined by a portion of one or more flame shaping holes of the first set of flame shaping holes 50. The inlet 74 is fluidly coupled to the compressed air (C). The first flame shaping airflow (D1) enters the one or more flame shaping holes of the first set of flame shaping holes 50 at the inlet 74 and exits the one or more flame shaping holes of the first set of flame shaping holes 50 at an outlet 76 located at an aft surface of the dome wall 44.

Another portion of the compressed air (C) can flow through the compressed air passageway 48 and can be fed to the second set of flame shaping holes 52 as a second flame shaping airflow (D2). In other words, another portion of the compressed air (C) can flow axially past the dome assembly 56 and enter the combustion chamber 46 by passing through the second set of flame shaping holes 52. That is, compressed air (C) can flow through the combustor liner 38 and into the combustion chamber 46 by passing through the second set of flame shaping holes 52.

The first flame shaping airflow (D1) can be used to direct and shape the flame. The second flame shaping airflow (D2) can be used to direct the combustion gas (G). In other words, the first set of flame shaping holes 50 or the second set of flame shaping holes 52 extending through the dome wall 44 or the combustor liner 38, respectively, direct compressed air (C) into the combustion chamber 46, where the directed compressed air (C) is used to control, shape, cool, or otherwise contribute to the combustion process in the combustion chamber 46.

The combustor 34 shown in FIG. 3 is well suited for the use of a hydrogencontaining gas as the fuel because it helps contain the faster moving flame front associated with hydrogen fuel, as compared to traditional hydrocarbon fuels. It is further contemplated that the combustor 34 can be used with other fuels, such as gaseous and liquid hydrocarbon fuels.

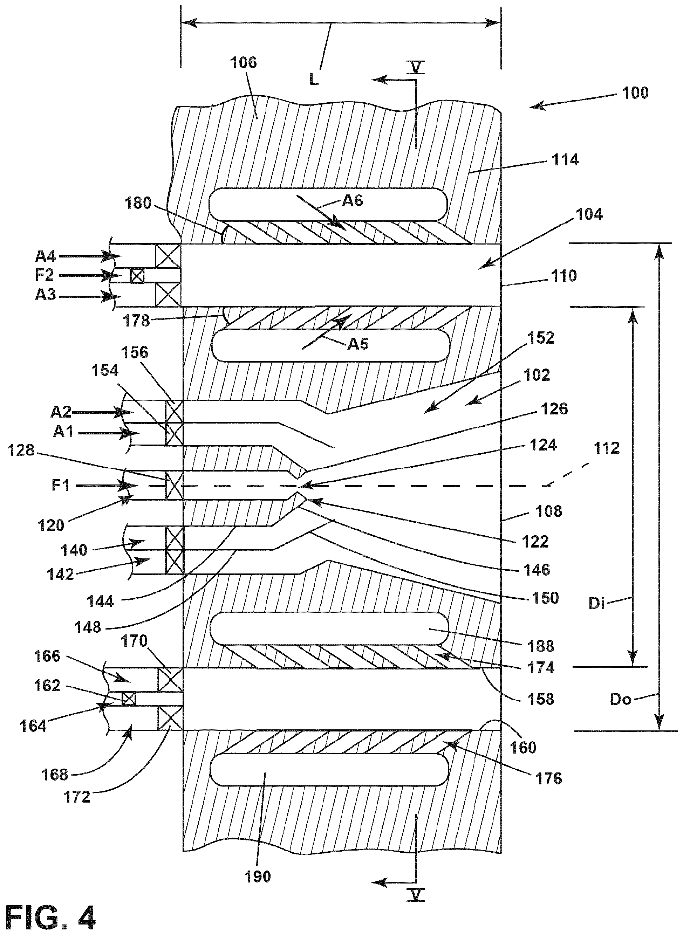

FIG. 4 illustrates a cross-sectional view of an injector 100 suitable for use within the set of injectors 32 of FIGS. 2 and 3. The injector 100 can have a generally annular shape. The injector 100 includes an inner nozzle 102 and an outer nozzle 104 in annular arrangement about the inner nozzle 102. In a non-limiting example, the injector 100 can be a generic twin annular premixing swirler (TAPS) that includes a pilot section as the inner nozzle 102 and an annular premixing section as the outer nozzle 104. The pilot section for the inner nozzle 102 can provide a rich pilot flame and the annular premixing section for the outer nozzle 104 can provide a lean secondary flame during operation.

The injector 100 is arranged within a deflector wall 106, which can be a portion of the dome wall 44 of FIGS. 2 and 3 and can comprise a body 114. The inner nozzle 102 and the outer nozzle 104 are provided in the body 114. The inner nozzle 102 exhausts to the combustion chamber 46 (FIG. 3) at a first outlet 108 and the outer nozzle 104 exhausts to the combustion chamber 46 (FIG. 3) at a second outlet 110 in annular arrangement about the first outlet 108. The injector 100 defines an injector axis 112 extending through the inner nozzle 102.

A first fuel passage 120 fluidly couples to the inner nozzle 102 centrally within the inner nozzle 102. The first fuel passage 120 includes a nozzle tip 122 having a minimum cross-sectional area 124 and expanding from the minimum cross-sectional area 124 to a first fuel outlet 126. The first fuel passage 120 can provide a first supply of fuel (F1) that swirls in a first direction, while a non-swirling flow is contemplated. Such a swirl can be imparted by a first fuel swirler 128 provided within the first fuel passage 120.

A first air passage 140 can be provided in annular arrangement about the first fuel passage 120 and a second air passage 142 can be provided in annular arrangement about the first air passage 140. The first and second air passages 140, 142 can be coaxial with the first fuel passage 120 or one another in non-limiting examples. The first air passage 140 can terminate aft of the first fuel passage 120, and the second air passage 142 can terminate at the same axial position as the first air passage 140, relative to the injector axis 112. The first air passage 140 can include a first constant cross-sectional area portion 144 and a first converging portion 146 downstream of the first constant cross-sectional area portion 144. The second air passage 142 can include a second constant cross-sectional area portion 148 and a second converging portion 150 downstream of the second constant cross-sectional area portion 148.

A first mixing region 152 can be defined within the inner nozzle 102 downstream of the first fuel passage 120, the first air passage 140, and the second air passage 142 and upstream of the first outlet 108. The first fuel passage 120 can exhaust to the first converging portion 146 of the first air passage 140. The first and second air passages 140, 142 can exhaust to the first mixing region 152, and can be at a common axial position relative to the injector axis 112 in a non-limiting example.

A first air swirler 154 can be provided in the first air passage 140 to impart a swirl to a first supply of air (A1) and a second air swirler 156 can be provided in the second air passage 142 to impart a swirl to a second supply of air (A2). The first air swirler 154 and the second air swirler 156 can be arranged to generate swirling airflows in common directions, such as each having a set of vanes oriented to impart a swirl to flows of air in a common circumferential direction about the injector axis 112. Such a common direction can be co-rotating or counter-rotating with the direction of swirl of the first supply of fuel (F1) provided from the first fuel passage 120. In a non-limiting example, the first air swirler 154 and the second air swirler 156 can provide first and second supplies of air (A1), (A2) that rotate in opposite directions. In non-limiting examples, the first air swirler 154 and the second air swirler 156 can be axial swirlers, imparting a swirl to an axial flow of air, while an arrangement with radial swirlers or combinations of radial and axial swirlers is contemplated in non-limiting examples.

The outer nozzle 104 is defined between an inner wall 158 and an outer wall 160. The inner and outer walls 158, 160 can be annular, with the inner wall 158 positioned interior of the outer wall 160. A second fuel passage 164 provides a second supply of fuel (F2) to the outer nozzle 104. The second fuel passage 164 can be located centrally within the outer nozzle 104 as equidistant between the inner and outer walls 158, 160 in a non-limiting example. A second fuel swirler 162 can be provided in the second fuel passage 164 to impart a swirl to the second supply of fuel (F2), while a non-swirled supply of fuel is contemplated.

A third air passage 166 can be positioned between the second fuel passage 164 and the inner wall 158. A fourth air passage 168 can be positioned between the second fuel passage 164 and the outer wall 160. The third air passage 166 and the fourth air passage 168 can be coaxial with the second fuel passage 164, as well as one another in non-limiting examples. A third air swirler 170 can be provided in the third air passage 166 to impart a swirl to a third supply of air (A3) and a fourth air swirler 172 can be provided in the fourth air passage 168 to impart a swirl to a fourth supply of air (A4).

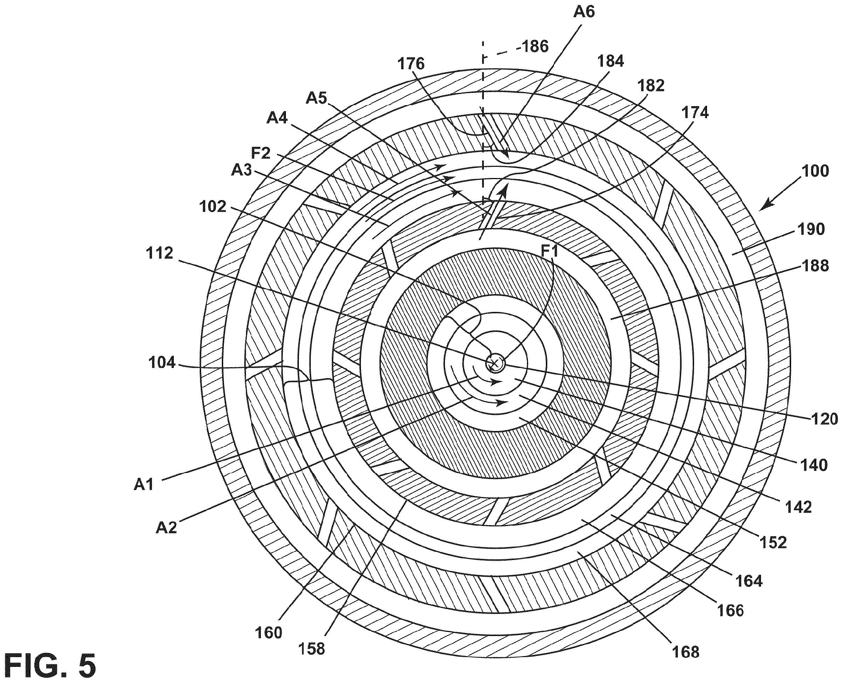

A first set of air conduits 174 fluidly exhausts to the outer nozzle 104 through the inner wall 158 from a first air plenum 188. The first set of air conduits 174 can be a plurality of air conduits in axial arrangement along the inner wall 158, as well as in circumferential arrangement about the inner wall 158 (see FIG. 5). A second set of air conduits 176 fluidly exhausts to the outer nozzle 104 through the outer wall 160 from a second air plenum 190. The second set of air conduits 176 can be a plurality of air conduits in axial arrangement along the outer wall 160, as well as in circumferential arrangement about the outer wall 160 (FIG. 5). The first set of air conduits 174 can each be arranged at a first angle 178 relative to the outer nozzle 104 at the inner wall 158. The second set of air conduits 176 can each be arranged at a second angle 180 relative to the outer nozzle 104 at the outer wall 160. The first set of air conduits 174 and the second set of air conduits 176 can each be arranged at a common angle, while different or individual angles for each conduit of the first and second sets of air conduits 174, 176 are contemplated. The first angle 178 and the second angle 180 can be defined in the axial direction, such as along the inner wall 158 and the outer wall 160, or relative to an axis (not shown) arranged parallel to the injector axis 112. In a non-limiting example, the first and second angles 178, 180 can be greater than 10 degrees (10°) and less than 90 degrees (90°). A fifth supply of air (A5) can be provided to the outer nozzle 104 from the first set of air conduits 174 and a sixth supply of air (A6) can be provided to the outer nozzle 104 from the second set of air conduits 176.

An inner diameter (Di) can be defined as the diameter for the inner wall 158 at the second outlet 110 and an outer diameter (Do) can be defined as the diameter for the outer wall 160 at the second outlet 110. An axial length (L) for the outer nozzle 104 can be defined as the length between second fuel passage 164 and the second outlet 110 and can be defined parallel to the injector axis 112. In a non-limiting example, the injector 100 at the outer nozzle 104 can be shaped and sized to permit suitable intermixing of the fuel and air prior to injection into the combustion chamber 46 (FIG. 3). In a non-limiting example, the injector 100 at the outer nozzle 104 can be shaped and sized such that when Di/Do is greater than or equal to 0.05 and less than or equal to 0.65, that L/Do is greater than or equal to 0 and less than or equal to 1.5. In another non-limiting example, the injector 100 at the outer nozzle 104 can be shaped and sized such that when Di/Do is greater than or equal to 0.65 and less than or equal to 0.95, that L/Do is greater than or equal to 0 and a value determined by Expression (1):

Expression 1:

$$\frac{L}{Do} = \left( 10.5 \ x \ \frac{Di}{Do} \right) - 5.3. \qquad\qquad (1)$$

Shaping and sizing the injector 100 according to these parameters permits the fuel and air to intermix prior to injection into the combustion chamber, and is sized appropriately to reduce or mitigate the opportunity for flame holding, autoignition, and flashback when utilizing hydrogen and non-diluent hydrogen fuels. Use of such fuels permits the reduction of carbon emissions.

Referring to FIG. 5, the first set of air conduits 174 can be further oriented at a third angle 182 and the second set of air conduits 176 can be further oriented at a fourth angle 184. The third angle 182 and the fourth angle 184 can be angled relative to a radial axis 186 extending radially from the injector axis 112 (illustrated as an "X" in FIG. 5) to impart a swirl to the fifth and sixth supplies of air (A5), (A6). In a non-limiting example, the third and fourth angles 182, 184 can be greater than 1 degree (1°) and less than 90 degrees (90°). It should be appreciated that while the direction of swirl for the third and fourth supplies of air (A3), (A4) and the second supply of fuel (F2) are shown as rotating in a common clockwise direction, that any combination of clockwise, counter-clockwise, co-rotating, or counter rotating implementations are contemplated. Furthermore, the orientation of the third and fourth angles 182, 184 can be co-rotating or counter rotating with the third and fourth supplies of air (A3), (A4) and the second supply of fuel (F2) in either of the clockwise or counterclockwise directions.

In operation, the first supply of fuel (F1) can be provided to the inner nozzle 102 from the first fuel passage 120. The first supply of fuel (F1) can be a gaseous hydrogen fuel or a liquid hydrogen fuel. In a non-limiting example, the first supply of fuel (F1) can be liquid hydrogen fuel that is selectively provided as gaseous hydrogen fuel by heating the liquid hydrogen fuel prior to provision to the inner nozzle 102. The first fuel swirler 128 (FIG. 4) can impart a swirl to the first supply of fuel (F 1), while a non-swirled first supply of fuel (F1) is contemplated. The first supply of fuel (F1) exhausts from the first fuel outlet 126 (FIG. 4) to the first air passage 140, where the first supply of fuel (F1) can intermix with the first supply of air (A1). The mixture of the first supply of fuel (F1) and the first supply of air (A1) exhausts to the first mixing region 152 where it can mix with the second supply of air (A2) from the second air passage 142 within the first mixing region 152 for the inner nozzle 102. The first supply of air (A1) and the second supply of air (A2) can be co-rotating in a common direction, while the first supply of fuel (F1) can be counter-rotating, relative to the first and second supplies of air (A1), (A2). Counter rotating fuel flows against the air flows provide for greater intermixing of the fuel and air as opposed to fuels that co-rotate with the air flows.

The second supply of fuel (F2) can be provided to the outer nozzle 104 from the second fuel passage 164. The second supply of fuel (F2) can be a liquid hydrogen fuel, for example. The second fuel swirler 162 (FIG. 4) can impart a swirl to the second supply of fuel (F2), while a non-swirled second supply of fuel (F2) is contemplated. The second supply of fuel (F2) can intermix with the third and fourth supplies of air (A3), (A4) from the third and fourth air passages 166, 168 within the outer nozzle 104. The second supply of fuel (F2) and the third and fourth supplies f air (A3), (A4) can be co-rotating, while counter-rotating, co-rotating, or combinations thereof are contemplated.

The fifth supply of air (A5) is supplied to the outer nozzle 104 from the first air plenum 188 through the first set of air conduits 174 and the sixth supply of air (A6) is supplied to the outer nozzle 104 from the second air plenum 190 through the second set of air conduits 176. The fifth and sixth supplies of air (A5), (A6) intermix with the mixture of the second supply of fuel (F2) and the third and fourth supplies of air (A3), (A4) within the outer nozzle 104. The fifth and sixth supplies of air (A5), (A6) can be co-rotating with the second supply of fuel (F2) and the third and fourth supplies of air (A3), (A4), while co-rotating implementations, counter-rotating implementations, and combinations thereof are contemplated.

The mixture of the first supply of fuel (F1), the first supply of air (A1), and the second supply of air (A2) is exhausted to the combustion chamber 46 (FIG. 3) from the inner nozzle 102 for combustion. The mixture of the second supply of fuel (F2), the third supply of air (A3), the fourth supply of air (A4), the fifth supply of air (A5), and the sixth supply of air (A6) is exhausted to the combustion chamber 46 from the outer nozzle 104 for combustion. The mixtures emitted from the inner and outer nozzles 102, 104 can be combusted among a common flame within the combustion chamber 46 (FIG. 3).

The first supply of fuel (F1) can be gaseous hydrogen, such as non-diluent hydrogen in a gaseous state, or can be liquid hydrogen such as non-diluent hydrogen in a liquid state. The first mixing region 152 provides suitable space and time for the hydrogen to intermix with air from the first and second supplies of air (A1), (A2) to reduce or prevent flame holding, autoignition, or flashback at the inner nozzle 102. The counter-rotating flows among the first supply of fuel (F1) and the first and second supplies of air (A1), (A2) permits such intermixing. Furthermore, utilizing a liquid hydrogen fuel, or gaseous hydrogen fuel converted from liquid hydrogen fuel, can have a relatively lesser temperature prior to combustion than that of traditional aircraft fuels or non-liquid hydrogen fuels.

The second supply of fuel (F2) can be liquid hydrogen, such as non-diluent hydrogen in a liquid state. Liquid hydrogen has a lower temperature than that of the gaseous hydrogen due to its liquid state. The lowest autoignition temperatures for a mixture of gaseous hydrogen and air is 858 Kelvin (K). Maintaining a temperature for a mixture of hydrogen and air below such a lowest autoignition temperature, which can be achieved with the injector 100 described herein, reduces, mitigates, or eliminates the opportunity for autoignition. If the mixture temperature exceeds the lowest autoignition temperature, the sizing of the outer mixing passage, such as that defined by Expression 1 (FIG. 4), can further abate the opportunity for autoignition. Furthermore, the flame speed for hydrogen decreases as the temperature for hydrogen decreases. Therefore, utilizing liquid hydrogen results in a fuel and air mixture having a lesser temperature than that using gaseous hydrogen, resulting in a lower flame speed for the mixture within the second fuel and air supply. Such a reduction in temperature, and therefore flame speed of the mixture, results in a decreased opportunity for autoignition and flame holding. Such reductions permit the second supply of fuel (F2) to be co-rotating with the third, fourth, fifth, and sixths supplies of air (A3), (A4), (A5), (A6), while higher temperature fuels typically utilize a counter-rotating system to provide suitable intermixing of fuel and air to reduce the opportunity for autoignition.

Benefits for the injector 100 include the reduction or elimination of the occurrence of autoignition, flame holding, and flashback for the use of hydrogen fuels, such as non-diluent hydrogen. The reduction or elimination of the occurrence of autoignition, flame holding, and flashback permits the use of hydrogen and non-diluent hydrogen fuels, permitting the reduction or elimination of carbon emissions in gas turbine engine architectures. Furthermore, the injector 100 permits direct injection of liquid hydrogen fuel into the combustor, which reduces overall weight and occupied space of the system. In a non-limiting example, utilizing a liquid hydrogen fuel can reduce the temperature of the fuel and air mixture provided to the combustor by 55 degrees Kelvin or more, which can reduce flame speed by 12-24% or more, thereby reducing flame holding and flashback at the injector 100. Utilizing the first and second sets of air conduits 174, 176 creates a layer of air along the inner and outer walls 158, 160 of the outer nozzle 104, which increases stability of the boundary layer at the second outlet 110 (FIG. 4), which can reduce flame holding and flashback due to an increase in air content of the fuel and air mixture near the walls of the outer nozzle 104. The boundary layer is a layer of air along the inner and outer walls 158, 160 created by the first and second sets of air conduits 174, 176 which positions between the mixture of the third and fourth supplies of air (A3), (A4) and the second supply of fuel (F2) and the inner and outer walls 158, 160. This boundary layer reduces flame holding and flashback around the second outlet 110.

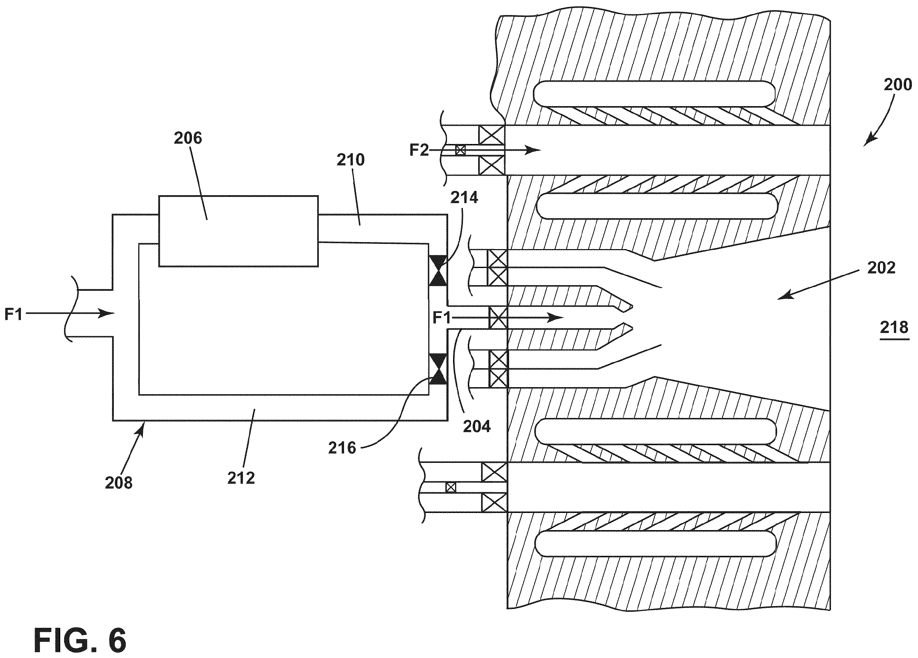

Referring to FIG. 6, an injector 200 is provided that is suitable for use within the set of injectors 32 of FIG. 2. The injector 200 of FIG. 6 can be substantially similar to the injector 100 of FIG. 4, and the discussion will be limited to the differences therebetween. More specifically, the injector 200 includes an inner nozzle 202 receiving a first supply of fuel (F1) from a first fuel passage 204 connected to a heat exchanger 206. An upstream conduit 208 can fluidly supply the first supply of fuel (F1) to the first fuel passage 204. The upstream conduit 208 can include a first portion 210 and a second portion 212. The first portion 210 can include the heat exchanger 206 and a first valve 214. The second portion 212 can include a second valve 216. The first valve 214 can be closed and the second valve 216 can be opened to provide the first supply of fuel (F1), bypassing the heat exchanger 206. The second valve 216 can be closed and the first valve 214 can be opened to provide the first supply of fuel (F1) heated or cooled by the heat exchanger 206.

The heat exchanger 206 can provide for varying the temperature of the first supply of fuel (F1). For example, the first supply of fuel (F1) and a second supply of fuel (F2) can be coupled to a common supply of liquid hydrogen. The heat exchanger 206 can heat the fuel to convert the liquid hydrogen into gaseous hydrogen for supplying to the first fuel passage 204 in gaseous form. Furthermore, in a non-limiting example, the heat exchanger 206 can provide for varying the temperature of the gaseous hydrogen provided to the first fuel passage 204, such as reducing the temperature of the gaseous hydrogen to reduce flame speed during engine operation. In this way, varying of the temperature of the first supply of fuel (F1) can be used for flame control of the ignited fuel and air mixture within a combustion chamber 218. Such flame control can be provided for reducing flame holding, autoignition, and flashback with the use of hydrogen and non-diluent hydrogen fuels, while appreciating the emission reduction benefits of the hydrogen fuels.

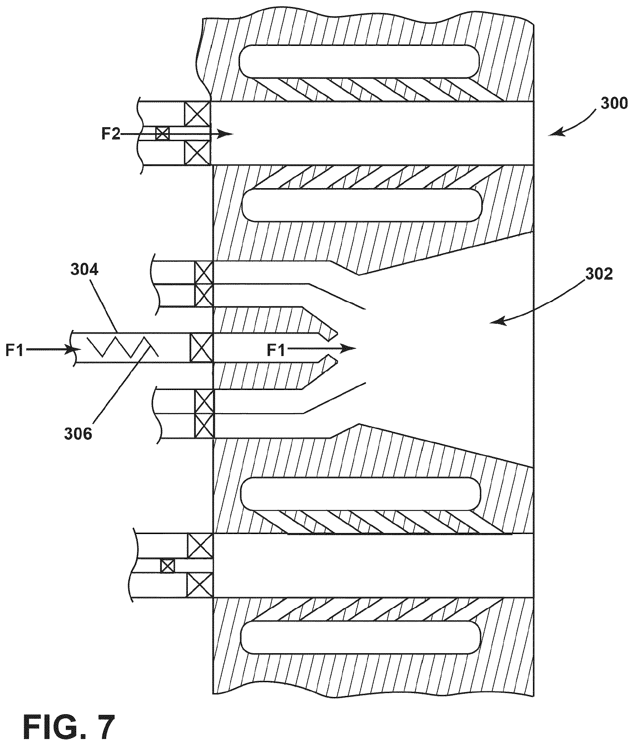

Referring to FIG. 7, an injector 300 is provided that is suitable for use within the set of injectors 32 of FIG. 2. The injector 300 of FIG. 7 can be substantially similar to the injectors 100, 200 of FIGS. 4 and 6, and the discussion will be limited to the differences therebetween. More specifically, the injector 300 includes an inner nozzle 302 receiving a first supply of fuel (F1) from a first fuel passage 304 with a heater 306 provided in the first fuel passage 304.

The heater 306 can provide for varying the temperature of the first supply of fuel (F1). For example, the first supply of fuel (F1) and a second supply of fuel (F2) can be coupled to a common supply of liquid hydrogen. The heater 306 can convert the liquid hydrogen into gaseous hydrogen for supplying to the first fuel passage 304 in gaseous form. Furthermore, in a non-limiting example, the heater 306 can provide for varying the temperature of the gaseous hydrogen provided to the first fuel passage 304, such as reducing the temperature of the gaseous hydrogen to reduce flame speed during engine operation to provide flame control of the ignited fuel. Such flame control can reduce flame holding, autoignition, and flashback with the use of hydrogen and non-diluent hydrogen fuels, while appreciating the emission reduction benefits of the hydrogen fuels.

The heat exchanger 206 of FIG. 6 and the heater 306 of FIG. 7 can be utilized to heat liquid hydrogen to change state to gaseous hydrogen for the primary fuel circuit to improve light off abilities, such as during ignition. After initial ignition, use of the heat exchanger 206 or the heater 306 can be ceased and the first supply of fuel (F1) can be provided as a liquid hydrogen fuel.

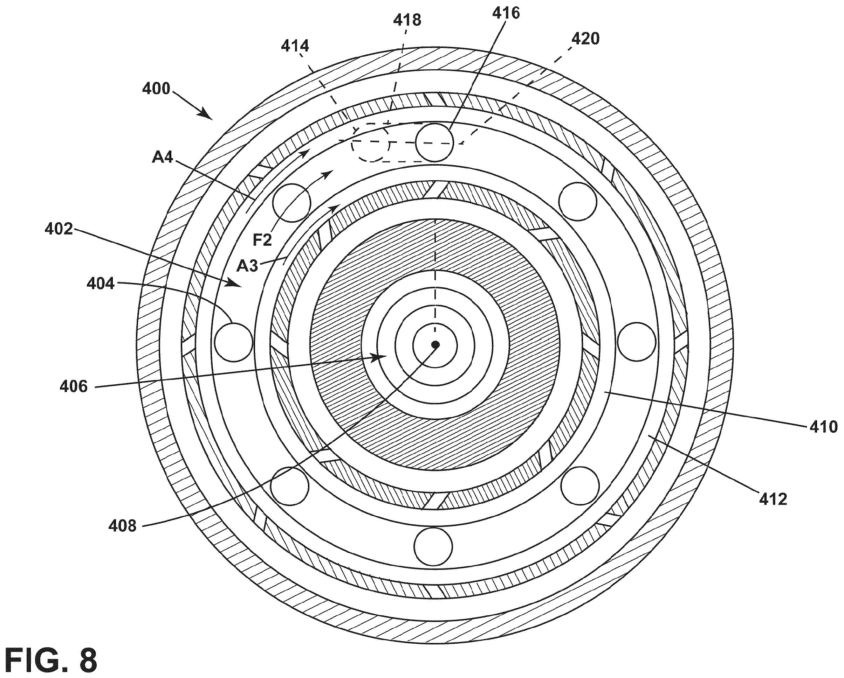

Referring to FIG. 8, an injector 400 is provided that is suitable for use within the set of injectors 32 of FIG. 2. The injector 400 of FIG. 8 can be substantially similar to the injector 100 of FIG. 5, and the discussion will be limited to the differences therebetween. More specifically, the injector 400 includes an outer nozzle 402 receiving a second supply of fuel (F2) from a set of second fuel passages 404 in annular arrangement about the outer nozzle 402, while the second fuel passage 164 of FIG. 5 is an annular passage. It is contemplated that a swirler (like the second fuel swirler 162 of FIG. 4) can be provided in each fuel passage of the set of second fuel passages 404 to impart a swirl to the second supply of fuel (F2). The injector 400 can include an inner nozzle 406 defining an injector axis 408 similar to the inner nozzle 102 of FIGS. 4-5.

A third air passage 410 is provided in annular arrangement radially interior of the set of second fuel passages 404 and a fourth air passage 412 is provided in annular arrangement exterior of the set of second fuel passages 404. The third air passage 410 can provide a third supply of air (A3) and the fourth air passage 412 can provide a fourth supply of air (A4), with each of the third and fourth supplies of air (A3), (A4) being swirled by a swirler (not shown) in a common direction, shown as a clockwise direction, while a counterclockwise direction is contemplated. Such a swirler can be similar to that as the third and fourth air swirlers 170, 172 of FIG. 4, in a non-limiting example.

Each fuel passage of the set of second fuel passages 404 can extend between a fuel passage inlet 414 and a fuel passage outlet 416 with a fuel passageway 418 extending therebetween and defining a fuel passage axis 420. The set of second fuel passages 404 can be arranged such that the fuel passage axis 420 is vectored in the same direction as the swirling direction for the third and fourth supplies of air (A3), (A4). That is, the fuel passage axis 420 can be offset from parallel to the injector axis 408 and arranged to inject a second supply of fuel (F2) vectored in a direction that is the same as the swirl direction for the third and fourth supplies of air (A), (A4). Such an arrangement can be common to all fuel passages of the set of second fuel passages 404.

In another non-limiting example, the fuel passage axis 420 can be arranged such that the fuel passage axis 420 is angled toward the third air passage 410 or the fourth air passage 412 in a radially inner or outer direction relative to the injector axis 408, such that the second supply of fuel (F2) is angled toward the third supply of air (A3) or the fourth supply of air (A4). Such an arrangement can be common to all fuel passages of the set of second fuel passages 404.

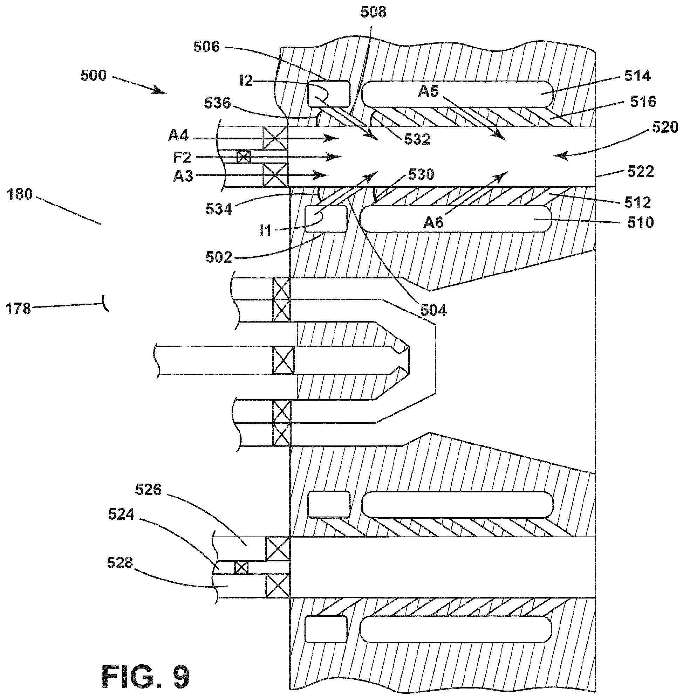

Referring to FIG. 9, an injector 500 is provided that is suitable for use within the set of injectors 32 of FIG. 2. The injector 500 of FIG. 7 can be substantially similar to the injector 100 of FIG. 4, and the discussion will be limited to the differences therebetween. More specifically, the injector 500 includes a first inert gas plenum 502 feeding a first set of inert gas conduits 504, a second inert gas plenum 506 feeding a second set of inert gas conduits 508, a first air plenum 510 feeding a first set of air conduits 512, and a second air plenum 514 feeding a second set of air conduits 516. FIG. 4, by comparison, includes only the first and second air plenums 188, 190 feeding first and second sets of air conduits 174, 176.

The first inert gas plenum 502 can be positioned forward of the first air plenum 510 and the second inert gas plenum 506 can be positioned forward of the second air plenum 514. The first and second inert gas plenums 502, 506 can be annular, while discrete plenums in annular arrangement are contemplated. The first and second sets of inert gas conduits 504, 508 can be provided in annular arrangement, fluidly coupling the first and second inert gas plenums 502, 506 to an outer nozzle 520.

The first set of air conduits 512 can each be arranged at a first angle 530 and the second set of air conduits 516 can each be arranged at a second angle 532, each relative to the outer nozzle 520. Additionally, the first set of inert gas conduits 504 can be arranged at a third angle 534 and the second set of inert gas conduits can be arranged at a fourth angle 536, each relative to the outer nozzle 520. In a non-limiting example, the first, second, third, and fourth angles 530, 532, 534, 536 can be greater than 10 degrees (10°) and less than 90 degrees (90°), while any angle greater than or equal to zero degrees (0°) and less than 90 degrees (90°) is contemplated. In a non-limiting example, one or more of the first, second, third, and fourth angles 530, 532, 534, 536 can be the same or different. For example, the first angle 530 and the third angle 534 can be the same, or the second angle 532 and the fourth angle 536 can be the same, or both, or any combination of similar or dissimilar angles.

In operation, a second supply of fuel (F2), such as liquid hydrogen fuel, can be supplied to the outer nozzle 520 from a second fuel passage 524, a third supply of air (A3) can be supplied to the outer nozzle 520 from a third air passage 526, and a fourth air supply (A4) can be supplied to the outer nozzle 520 from a fourth air passage 528. A first supply of inert gas (I1) can be provided to the outer nozzle 520 from the first inert gas plenum 502 through the first set of inert gas conduits 504 and a second supply of inert gas (I2) can be provided to the outer nozzle 520 from the second inert gas plenum 506 through the second set of inert gas conduits 508. The first and second supplies of inert gas (I1), (I2) can be, by way of non-limiting example, carbon dioxide ($CO_2$), nitrogen ($N_2$), helium (He), Argon (Ar), or combinations thereof. A fifth supply of air (A5) can be provided to the outer nozzle 520 through the first set of air conduits 512 and a sixth supply of air (A6) can be provided to the outer nozzle 520 through the second set of air conduits 516. The second supply of fuel (F2) mixes with the third and fourth supplies of air (A3), (A4) within the outer nozzle 520. The mixture then further intermixes with the first and second supplies of inert gas (I1), (I2), passing toward a second outlet 522 for the outer nozzle 520. The mixture thereof mixes further yet with the fifth and sixth supplies of air (A5), (A6) within the outer nozzle 520, where the mixture can exhaust through the second outlet 522 for combustion.

Gaseous fuels, such as hydrogen and non-diluent hydrogen, have faster flame speeds and higher flame temperatures than that of liquid fuels or atomized liquid fuels, like jet fuel, which can result in flashback or flame holding along portions of the injector or the surrounding environment. Such flashback or flame holding can impact durability at the injector.

Mixing gaseous fuels, such as hydrogen and non-diluent hydrogen, with an inert gas can reduce the flame speed. That is, a mixture of gaseous fuel with an inert gas has a slower flame speed than that of the gaseous fuel alone. For example, a mixture of 50% hydrogen and 50% argon has a flame speed of about 1.35 meters per second (1.35 m/s), while the flame speed for 100% hydrogen is about 2.4 meters per second (2.4 m/s). Therefore, as can be appreciated, utilizing an inert gas mixed with a gaseous fuel supply can reduce flame speeds for fuel, which can reduce flame holding or flashback, thereby increasing durability and lifetime of the injector 500 and other surrounding components. Furthermore, utilizing an inert gas can appreciate the emissions benefits of utilizing a gaseous fuel like hydrogen and non-diluent hydrogen, within existing engine environments.

Benefits associated with the aspects herein include reducing flame speed and flame temperature for a gaseous fuel or highly combustible fuel, like hydrogen or non-diluent hydrogen. The incorporation of the inert gas reduces the flame speed and flame temperature, providing increased durability at the injector and combustor, which improves time on wing, component lifetime, and reduces required maintenance and related cost. Furthermore, the incorporation of the inert gas permits appreciating the benefits of reduced emissions from the use of reduced emissions gaseous fuels, such as hydrogen and non-diluent hydrogen fuels, while mitigating or eliminating flashback and flame holding along the injector.

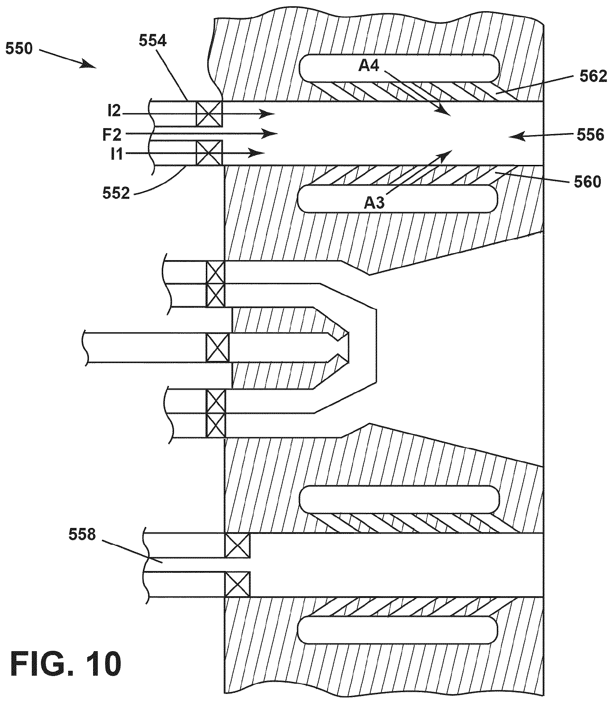

Referring to FIG. 10, an injector 550 is provided that is suitable for use within the set of injectors 32 of FIG. 2. The injector 550 of FIG. 10 can be substantially similar to the injector 100 of FIG. 4, and the discussion will be limited to the differences therebetween. More specifically, the injector 550 includes a first inert gas passage 552 providing a first supply of inert gas (I1) and a second inert gas passage 554 providing a second supply of inert gas (I2) to an outer nozzle 556. The first inert gas passage 552 is provided along an interior of a second fuel passage 558 and the second inert gas passage 554 is provided along an exterior of the second fuel passage 558. FIG. 4, by comparison, has the third and fourth air passages 166, 168 provided along the interior and exterior of the second fuel passage 164.

In operation, a second supply of fuel (F2) is provided from the second fuel passage 558 to the outer nozzle 556, which can be a hydrogen fuel, such as liquid hydrogen or non-diluent liquid hydrogen. The second supply of fuel (F2) mixes with the first and second supplies of inert gas (I1), (I2). The mixture passes along the outer nozzle 556 which further intermixes with a third supply of air (A3) provided from a first set of air conduits 560 and a fourth supply of air (A4) provided from a second set of air conduits 562. The mixture thereof is then exhausted from the outer nozzle 556 for combustion.

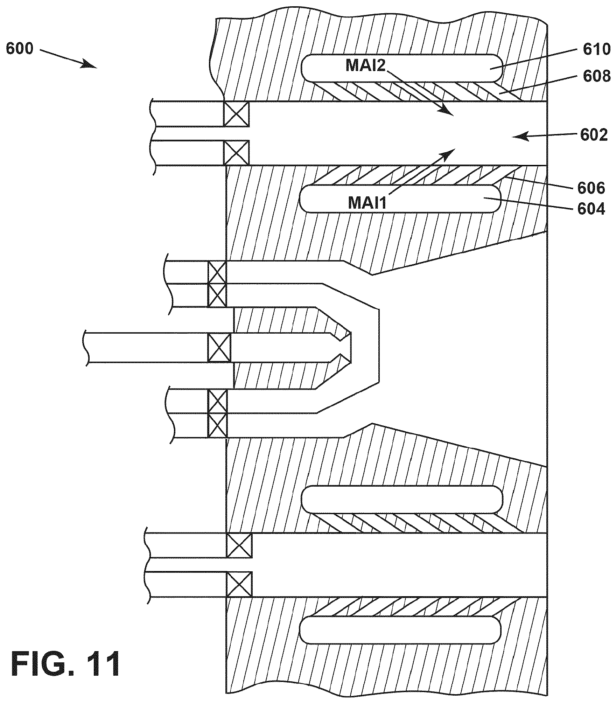

Referring to FIG. 11, an injector 600 is provided that is suitable for use within the set of injectors 32 of FIG. 2. The injector 600 of FIG. 11 can be substantially similar to the injector 100 of FIG. 4, and the discussion will be limited to the differences therebetween. More specifically, the injector 600 includes a first plenum 604 fluidly coupled to an outer nozzle 602 by a first set of conduits 606 and a second plenum 608 coupled to the outer nozzle 602 by a second set of conduits 610.

The first plenum 604 can supply a first mixture of air and inert gas (MAI1) to the outer nozzle 602 and the second plenum can supply a second mixture of air and inert gas (MAI2) to the outer nozzle 602. In a non-limiting example, the first mixture of air and inert gas (MAI1) can have the same concentration or ratio of air to inert gas, such as being supplied from a common source having a supply of premixed air and inert gas. In an alternative non-limiting example, different concentrations of air and inert gas among the first and second mixtures of air and inert gas (MAI1), (MAI2) is contemplated. FIG. 4, by comparison, includes the first and second air plenums 188, 190 which only provide the fifth and sixth supplies of air (A5), (A6), while FIG. 11 supplies the first and second mixtures of air and inert gas (MAI1), (MAI2) from the first and second plenums 604, 608.

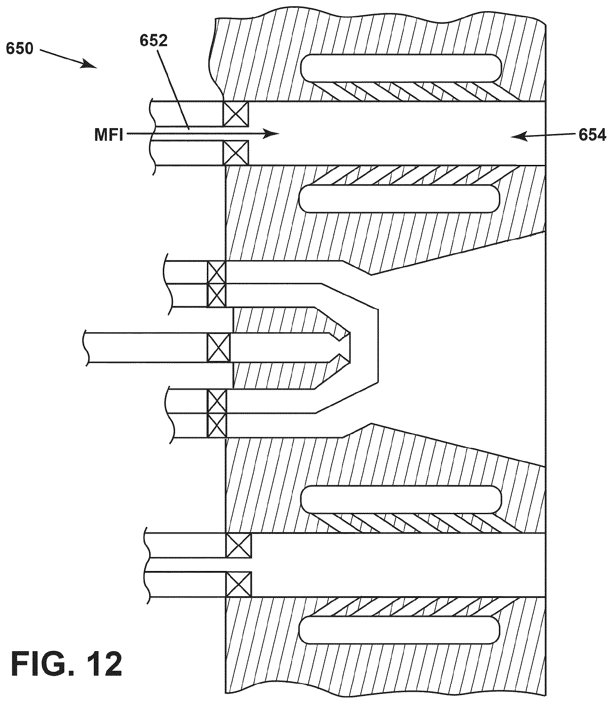

Referring to FIG. 12, an injector 650 is provided that is suitable for use within the set of injectors 32 of FIG. 2. The injector 650 of FIG. 12 can be substantially similar to the injector 100 of FIG. 4, and the discussion will be limited to the differences therebetween. More specifically, the injector 650 includes a second fuel passage 652 that supplies a mixture of fuel and inert gas (MFI) to an outer nozzle 654. The mixture of fuel and inert gas (MFI) can be premixed, having predetermined concentrations of fuel and inert gas. FIG. 4, by comparison, includes the second fuel passage 164 that supplies fuel without intermixed inert gas. The fuel can be a liquid hydrogen, for example, which can be intermixed with the inert gas to define the mixture of fuel and inert gas (MFI).

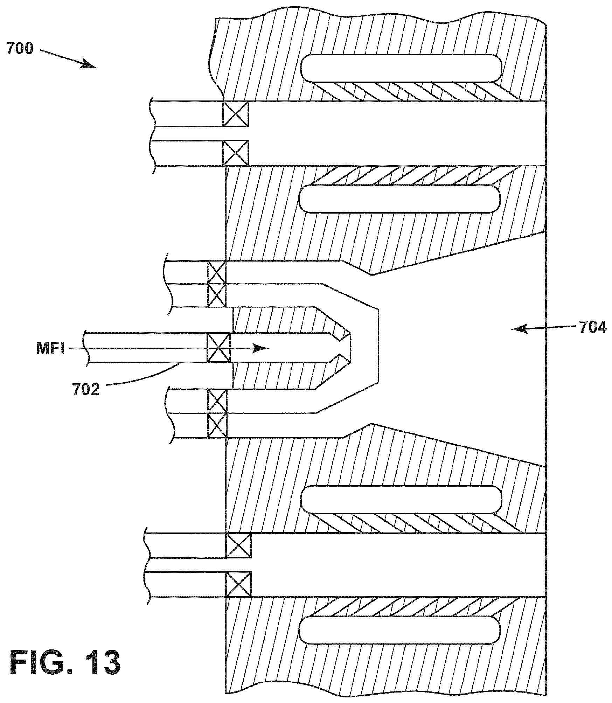

Referring to FIG. 13, an injector 700 is provided that is suitable for use within the set of injectors 32 of FIG. 2. The injector 700 of FIG. 13 can be substantially similar to the injector 100 of FIG. 4, and the discussion will be limited to the differences therebetween. More specifically, the injector 700 includes a first fuel passage 702 that supplies a mixture of fuel and inert gas (MFI) to an inner nozzle 704. The mixture of fuel and inert gas (MFI) can be premixed, having predetermined concentrations of fuel and inert gas. FIG. 4, by comparison, includes the first fuel passage 120 that supplies fuel without intermixed inert gas. The fuel can be a liquid hydrogen or a gaseous hydrogen, for example, which can be intermixed with the inert gas to define the mixture of fuel and inert gas (MFI).

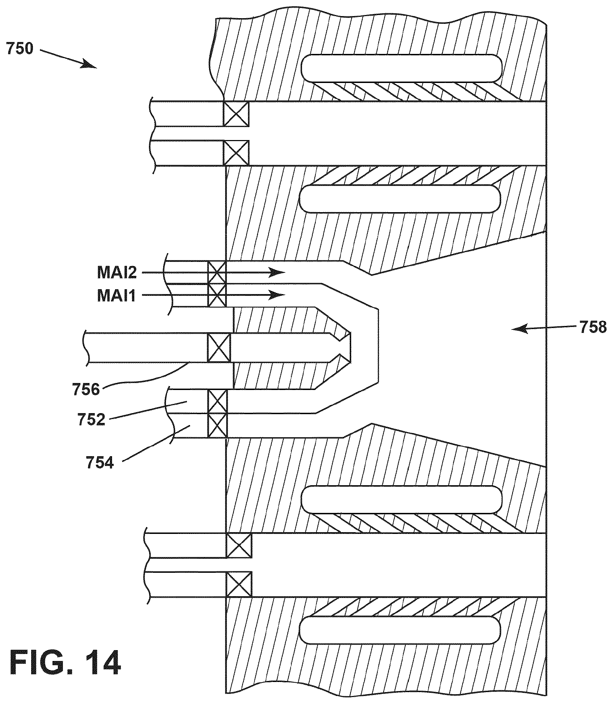

Referring to FIG. 14, an injector 750 is provided that is suitable for use within the set of injectors 32 of FIG. 2. The injector 750 of FIG. 14 can be substantially similar to the injector 100 of FIG. 4, and the discussion will be limited to the differences therebetween. More specifically, the injector 750 includes a first passage 752 and a second passage 754 in annular arrangement about a first fuel passage 756. The first passage 752 can supply a first mixture of air and inert gas (MAI1) to an inner nozzle 758 and the second passage 754 can supply a second mixture of air and inert gas (MAI2) to the inner nozzle 758. The first and second mixtures of air and inert gas (MAI1), (MAI2) can be premixed, having predetermined concentrations of fuel and inert gas. In a non-limiting example, the first mixture of air and inert gas (MAI1) can have the same concentration or ratio of air to inert gas, such as being supplied from a common source having a supply of premixed air and inert gas. In an alternative non-limiting example, different concentrations of air and inert gas among the first and second mixtures of air and inert gas (MAI1), (MAI2) is contemplated. FIG. 4, by comparison, includes the first and second air passages 140, 142 that supplies air without intermixed inert gas.

Benefits of the injectors 600, 650, 700, 750 of FIGS. 11-14 include reducing flame speed and flame temperature for a fuel or highly combustible fuel, like hydrogen or non-diluent hydrogen in gaseous and liquid forms by the incorporation of inert gas. The incorporation of the inert gas reduces the flame speed and flame temperature, providing increased durability, which improves time on wing, component lifetime, and reduces required maintenance and related cost. Furthermore, the incorporation of the inert gas permits appreciating the benefits of reduced emissions from the use of reduced emissions gaseous fuels, such as hydrogen and non-diluent hydrogen fuels, while mitigating or eliminating flashback and flame holding along the injector

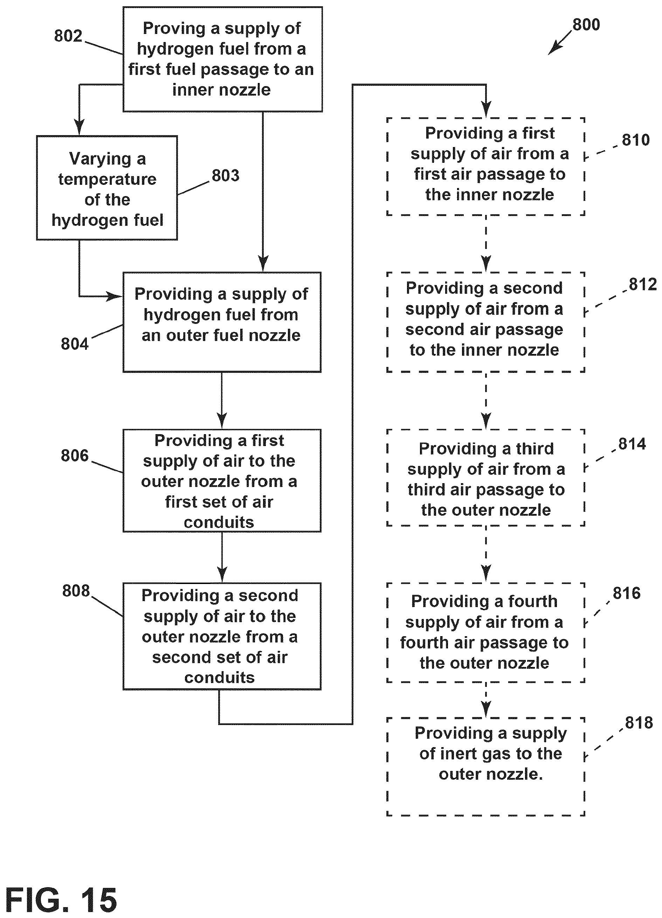

Referring to FIG. 15, a flow chart depicts a method 800 of injecting fuel to a combustor with an injector, such as the combustor 34 of FIG. 3 and the injectors 100, 200, 300, 400, 500, 550, 600, 650, 700, 750 of FIGS. 4-14. The method 800 includes, at 802, providing a supply of hydrogen fuel from a first fuel passage to an inner nozzle. The first fuel passage can be the first fuel passage 120, 204, 304, 702, 756, of FIGS. 4, 6, 7, and 13-14 and the inner nozzle can be the inner nozzle 102, 202, 302, 406, 704, 758 of FIGS. 4, 6, 7, and 13-14 in non-limiting examples. The supply of hydrogen fuel can be a gaseous hydrogen fuel, a liquid hydrogen fuel, or gaseous hydrogen fuel that was heated from liquid hydrogen fuel. Such heating can be provided by at least one of the heat exchanger 206 of FIG. 6 or the heater 306 of FIG. 7, in non-limiting examples.

At 803, the method 800 can include varying a temperature of the hydrogen fuel. For example, the heat exchanger 206 of FIG. 6 or the heater of FIG. 7 can be used to vary the temperature of the hydrogen fuel. More specifically, the heat exchanger 206 or the heater 306 can be used to heat a liquid hydrogen fuel to transition to gaseous hydrogen fuel for provision to the inner nozzle as a gaseous hydrogen fuel. Such heating of liquid hydrogen fuel permits storing the hydrogen fuel in liquid form at a common source, while permitting the use of either or both liquid or gaseous hydrogen fuel at a common injector.

Varying the temperature of the hydrogen fuel can be used to mitigate flame holding or flashback at the injector. More specifically, flame speed for hydrogen fuels decreases as temperature of the fuel decreases. Utilizing lower temperature hydrogen fuel can reduce flame speed, mitigating flame holding or flashback.

The method 800 further includes, at 804, providing a supply of hydrogen fuel from an outer nozzle. The outer nozzle can be the outer nozzle 104, 402, 520, 556, 602 of FIGS. 4-5 and 8-11 in non-limiting examples. The supply of hydrogen fuel can be a liquid hydrogen fuel like a non-diluent liquid hydrogen in liquid form or atomized form in non-limiting examples, while a gaseous hydrogen is contemplated. Provision of the supply of liquid hydrogen fuel to the outer nozzle can be from the second fuel passage 164, 404, 558 of FIGS. 4-5, 8, and 10 in non-limiting examples.

The method 800 further includes, at 806, providing a first supply of air to the outer nozzle from a first set of air conduits. The first set of air conduits can be the first set of air conduits 174, 512, 560 of FIGS. 4-5 and 9-10 for example.

The method 800 further includes, at 808, providing a second supply of air to the outer nozzle from a second set of air conduits. The second set of air conduits can be the second set of air conduits 176, 516, 562 of FIGS. 4-5 and 9-10 for example.

The method 800 optionally includes 810-818, illustrated in broken lines, one or more of which can be included with the method 800. The method 800, at 810, can include providing a first supply of air from a first air passage to the inner nozzle. The first air passage can be the first air passage 140 of FIGS. 4-5 or the first passage 752 of FIG. 14 and the inner nozzle can be the inner nozzle 102, 202, 302, 406, 704, 758 of FIGS. 4, 6, 7, and 13-14 in non-limiting examples. The first supply of air can be swirled, such as swirled by the first air swirler 154 of FIG. 4.

At 812, the method 800 can optionally include providing a second supply of air from a second air passage to the inner nozzle. The second air passage can be the second air passage 142 of FIGS. 4-5 or the second passage 754 of FIG. 14 in non-limiting examples. The second supply of air can be swirled, such as swirled by the second air swirler 156 of FIG. 4. The second supply of air can be co-rotating with the first supply of air in a common direction, while a counter-rotating arrangement is contemplated.

At 814, the method 800 can optionally include providing a third supply of air from a third air passage to the outer nozzle. The third air passage can be the third air passage 166, 410 of FIGS. 4-5 and 8 and the outer nozzle can be the outer nozzle 104, 402 of FIGS. 4-5 and 8 in non-limiting examples. The third supply of air can be swirled, such as swirled by the third air swirler 170 of FIG. 4.

At 816, the method 800 can optionally include providing a fourth supply of air from a fourth air passage to the outer nozzle. The fourth air passage can be the fourth air passage 168, 412 of FIGS. 4-5 and 8 and the outer nozzle can be the outer nozzle 104, 402 of FIGS. 4-5 and 8 in non-limiting examples. The fourth supply of air can be swirled, such as swirled by the fourth air swirler 172 of FIG. 4. The fourth supply of air can be co-rotating with the third supply of air in a common direction, while a counter-rotating arrangement is contemplated.

At 818, the method 800 can optionally include providing a supply of inert gas to at least one of the inner nozzle or the outer nozzle. In non-limiting examples, the inert gas can be supplied to the outer nozzle from the at least one of first set of inert gas conduits 504, the second set of inert gas conduits 508, the first inert gas passage 552, or the second inert gas passage 554 supplying the outer nozzle 520, 556 of FIGS. 9-10. Additionally, the supply of inert gas can be supplied to one of the inner nozzle or the outer nozzle while intermixed with a supply of air or a supply of fuel. In non-limiting examples, the supply of inert gas can be supplied to the outer nozzle as a mixture of air and inert gas, like the first and second mixtures of air and inert gas (MAI1), (MAI2) provided from the first and second sets of conduits 606, 610 of FIG. 11, or can be supplied to the inner nozzle 758 as a mixture of air and inert gas like the first and second mixture of air and inert gas (MAI1), (MAI2) provided from the first and second passages 752, 754 of FIG. 14. In additional non-limiting examples, the supply of inert gas can be supplied to the inner or outer nozzles intermixed with a supply of fuel, such as being provided to the outer nozzle 654 from a second fuel passage 652 as the mixture of fuel and inert gas (MFI) of FIG. 12, or can be provided to the inner nozzle 704 from the first fuel passage 702 as the mixture of fuel and inert gas (MFI) of FIG. 13.

Benefits associated with the injectors and method described herein include mitigation or elimination of flame holding, autoignition, and flashback at the injector. Utilizing lower temperature hydrogen fuels can reduce flame speeds, which reduces or eliminates the opportunity for such flame holding or flashback. Such mitigation or elimination of flame holding and flashback permits the use of hydrogen fuels resulting in a decrease in emissions compared to that of traditional fuels. Additionally, the injectors and method described herein permit the incorporation of inert gas into the fuel and air mixture, which also reduces flame speed for the hydrogen fuels without increasing emissions. Such an incorporation of inert gas permits the use of hydrogen fuels by reducing flame speed to mitigate or eliminate flame holding and flashback, permitting usage of hydrogen fuels and appreciating the reduction in emissions resultant of using the hydrogen fuels.

This written description uses examples to disclose the present disclosure, including the best mode, and also to enable any person skilled in the art to practice the disclosure, including making and using any devices or systems and performing any incorporated methods. The patentable scope of the disclosure is defined by the claims, and may include other examples that occur to those skilled in the art. Such other examples are intended to be within the scope of the claims if they include structural elements that do not differ from the literal language of the claims, or if they include equivalent structural elements with insubstantial differences from the literal languages of the claims.

It will be appreciated that the injectors, and aspects thereof, as discussed herein are provided by way of example only and that in other exemplary embodiments, the injectors may have any other suitable configurations. The aspects and features provided herein need not be limited to the embodiments as shown, and it is further contemplated that features and aspects from one or more embodiments can be added, removed, or interchanged with one or more other embodiment to define additional embodiments herein.

It should be appreciated that the different injectors and their features as described among FIGS. 4-14 can all be utilized within a common engine, such as the turbine engine 10 of FIG. 1, or within a common component, such as the combustor 34 of FIGS. 2-3, and it should be understood that the injectors and their features are not mutually exclusive.

Further aspects are provided by the subject matter of the following clauses:

An injector for a turbine engine comprising a compression section, combustion section, and turbine section is serial flow arrangement, the injector comprising: a body; an inner nozzle provided within the body and defining a injector axis; an outer nozzle provided within the body in annular arrangement about the inner nozzle; a first fuel passage fluidly coupled to the inner nozzle and arranged along the injector axis; a second fuel passage fluidly coupled to the outer nozzle; a first set of air conduits in annular arrangement about the body interior of the outer nozzle and fluidly coupled to the outer nozzle; a second set of air conduits in annular arrangement about the body exterior of the outer nozzle and fluidly coupled to the outer nozzle.

The injector of any preceding clause, further comprising a first air passage in annular arrangement about the first fuel passage and fluidly coupled to the inner nozzle.

The injector of any preceding clause, wherein the first air passage is provided as a first inert gas passage configured to supply a first inert gas to the outer nozzle.

The injector of any preceding clause, wherein the second air passage is provided as a second inert gas passage configured to supply a second inert gas to the outer nozzle.

The injector of any preceding clause, wherein the first air passage is coaxial with the first fuel passage.

The injector of any preceding clause, wherein the first air passage further comprises a first constant cross-sectional area portion and a first converging portion extending from the first constant cross-sectional area portion.

The injector of any preceding clause, wherein the first air passage terminates aft of the first fuel passage.

The injector of any preceding clause, wherein the first air passage is configured to provide a first mixture of air and inert gas to the inner nozzle.

The injector of any preceding clause, wherein the second air passage is configured to provide a second mixture of air and inert gas to the inner nozzle.

The injector of any preceding clause, further comprising a second air passage in annular arrangement about the first air passage and fluidly coupled to the inner nozzle.

The injector of any preceding clause, wherein the second air passage is coaxial with the first air passage and the first fuel passage.

The injector of any preceding clause, wherein the second air passage further comprises a second constant cross-sectional area portion and a second converging portion extending from the second constant cross-sectional area portion.

The injector of any preceding clause, wherein the second air passage terminates at a same axial position as the first air passage, relative to the injector axis.

The injector of any preceding clause, further comprising a first swirler provided in the first air passage and a second swirler provided in the second air passage.

The injector of any preceding clause, wherein the first swirler is arranged to swirl a first supply of air in a first direction, wherein the second swirler is arranged to swirl a second supply of air in the first direction, and wherein the first direction extends in a circumferential direction about the injector axis.

The injector of any preceding clause, further comprising a first fuel swirler provided within the first fuel passage, wherein the first fuel swirler swirls a first supply of fuel in a second direction in a circumferential direction about the injector axis opposite of the first direction.

The injector of any preceding clause, wherein the second air passage is configured to provide a second mixture of air and inert gas to the inner nozzle.

The injector of any preceding clause, further comprising a third air passage fluidly coupled to the outer nozzle and in annular arrangement interior of the second fuel passage.

The injector of any preceding clause, wherein the third air passage is coaxial with the second fuel passage.

The injector of any preceding clause, wherein the third air passage fluidly couples to the outer nozzle forward of the first set of air conduits.

The injector of any preceding clause, wherein the third air passage is configured to provide a first supply of inert gas to the outer nozzle.

The injector of any preceding clause, further comprising a fourth air passage fluidly coupled to the outer nozzle and in annular arrangement about the second fuel passage.

The injector of any preceding clause, wherein the fourth air passage is coaxial with the second fuel passage.

The injector of any preceding clause, wherein the fourth air passage fluidly couples to the outer nozzle forward of the second set of air conduits.

The injector of any preceding clause, wherein the fourth air passage is configured to provide a second supply of inert gas to the outer nozzle.

The injector of any preceding clause, wherein the second fuel passage is configured to provide a mixture of fuel and inert gas to the outer nozzle.

The injector of any preceding clause, wherein the first fuel passage is configured to provide a mixture of fuel and inert gas to the inner nozzle.

The injector of any preceding clause, wherein the first set of air conduits are fluidly coupled to a first air plenum provided within the body.

The injector of any preceding clause, wherein the first air plenum is configured to provide a first mixture of air and inert gas to the first set of air conduits.

The injector of any preceding clause, wherein the second set of air conduits are fluidly coupled to a second air plenum provided within the body.

The injector of any preceding clause, wherein the second air plenum is configured to provide a second mixture of air and inert gas to the second set of air conduits.

The injector of any preceding clause, wherein the first set of air conduits are arranged at a first angle relative to the outer nozzle in an axial direction defined parallel to the injector axis, and wherein the first angle is greater than or equal to 10 degrees (10°) and less than 90 degrees (90°).

The injector of any preceding clause, wherein the second set of air conduits are arranged at a second angle relative to the outer nozzle in the axial direction, and wherein the first angle is greater than or equal to 10 degrees (10°) and less than 90 degrees (90°).

The injector of any preceding clause, wherein the first set of air conduits are arranged at a third angle relative to a radial axis extending from the injector axis, and wherein the first angle is greater than or equal to 1 degree (1°) and less than 90 degrees (90°).

The injector of any preceding clause, wherein the second set of air conduits are arranged at a fourth angle relative to the radial axis, and wherein the first angle is greater than or equal to 1 degree (1°) and less than 90 degrees (90°).

The injector of any preceding clause, further comprising a heat exchanger fluidly coupled to the first fuel passage.

The injector of any preceding clause, wherein the heat exchanger is configured to convert a liquid hydrogen fuel to a gaseous hydrogen fuel.

The injector of any preceding clause, wherein the first fuel passage is coupled to an upstream conduit having a first portion with the heat exchanger and a first valve.

The injector of any preceding clause, wherein the upstream conduit has a second portion with a second valve bypassing the heat exchanger.

The injector of any preceding clause, further comprising a heater positioned within the first fuel passage.

The injector of any preceding clause, wherein the second fuel passage is arranged as a set of second fuel passages in annular arrangement about the body.

The injector of any preceding clause, wherein the first fuel passage supplies a gaseous hydrogen fuel and wherein the second fuel passage supplies a liquid hydrogen fuel.

The injector of any preceding clause, further comprising a first set of inert gas conduits fluidly coupled to the outer nozzle.

The injector of any preceding clause, further comprising a first inert gas plenum provided within the body and fluidly coupled to the first set of inert gas conduits.

The injector of any preceding clause, wherein the first set of inert gas conduits is arranged interior of the outer nozzle and positioned forward of the first set of air conduits.

The injector of any preceding clause, further comprising a second set of inert gas conduits fluidly coupled to the outer nozzle.

The injector of any preceding clause, further comprising a second inert gas plenum provided within the body and fluidly coupled to the second set of inert gas conduits.

The injector of any preceding clause, wherein the second set of inert gas conduits is arranged exterior of the outer nozzle and positioned forward of the second set of air conduits.

The injector of any preceding clause, wherein the first inert gas plenum is positioned forward of the first air plenum within the body.

The injector of any preceding clause, wherein the second inert gas plenum is positioned forward of the second air plenum within the body.

The injector of any preceding clause, wherein the first inert gas plenum and the second inert gas plenum are provided as annular plenums within the body.

The injector of any preceding clause, wherein the first inert gas plenum and the second inert gas plenum are provided as a first set of discrete plenums and a second set of discrete plenums in annular arrangement within the body.

The injector of any preceding clause, wherein the outer nozzle is defined between an inner wall and an outer wall, and wherein the first set of inert gas conduits extend through the inner wall and the second set of inert gas conduits extend through the outer wall.

The injector of any preceding clause, wherein the first set of inert gas conduits and the second set of inert gas conduits are oriented at an angle relative to the injector axis, and wherein the angle for the first set of inert gas conduits is the same as an angle for the first set of air conduits and the angle for the second set of inert gas conduits is the same as an angle for the second set of air conduits.

The injector of any preceding clause, wherein the first set of air conduits are configured to provide a first mixture of air and inert gas to the outer nozzle.

The injector of any preceding clause, wherein the second set of air conduits are configured to provide a second mixture of air and inert gas to the outer nozzle.

The injector of any preceding clause, wherein the second fuel passage is configured to supply a mixture of hydrogen and inert gas.

The injector of any preceding clause, wherein the mixture of hydrogen and inert gas is a mixture of liquid hydrogen and inert gas.

The injector of any preceding clause, wherein the first fuel passage is configured to supply a mixture of hydrogen and inert gas.

The injector of any preceding clause, wherein the mixture of hydrogen and inert gas is a mixture of gaseous hydrogen and inert gas.

The injector of any preceding clause, wherein the body is a deflector wall.

The injector of any preceding clause, wherein the outer nozzle is defined between an inner wall spaced from an outer wall in annular arrangement about the inner wall; wherein an inner diameter for the outer nozzle is defined as the diameter of the inner wall; wherein an outer diameter for the outer nozzle is defined as the diameter of the outer wall; wherein an axial length for the outer nozzle is defined as the length between the second fuel passage and the second outlet; wherein when outer nozzle is sized such that the inner diameter divided by the outer diameter is greater than or equal to 0.05 and less than or equal to 0.65, that the axial length divided by the outer diameter is greater than or equal to 0 and less than or equal to 1.5.

The injector of any preceding clause, wherein when the outer nozzle is sized such that the inner diameter divided by the outer diameter is greater than 0.65 and less than or equal to 0.95, the axial length divided by the outer diameter is greater than or equal to zero and less than or equal to a value determined by the following expression: $\frac{L}{Do} = \left( 10.5\ x\ \frac{Di}{Do} \right) - 5.3$ , wherein L represents the axial length, Do represents the outer diameter, and Di represents the inner diameter.

The injector of any preceding clause, further comprising: a first air passage in annular arrangement about the first fuel passage and fluidly coupled to the inner nozzle; a second air passage in annular arrangement about the first air passage and fluidly coupled to the inner nozzle; a third air passage fluidly coupled to the outer nozzle and in annular arrangement within the second fuel passage; and a fourth air passage fluidly coupled to the outer nozzle and in annular arrangement about the second fuel passage.

The injector of any preceding clause, wherein the inert gas is one of carbon dioxide ($CO_2$), nitrogen ($N_2$), helium (He), Argon (Ar), or combinations thereof.

An injector for a turbine engine comprising a compression section, combustion section, and turbine section is serial flow arrangement, the injector comprising: a body; an inner nozzle provided within the body and defining a injector axis; an outer nozzle provided within the body in annular arrangement about the inner nozzle; a first fuel passage fluidly coupled to the inner nozzle and arranged along the injector axis; a first air passage in annular arrangement about the first fuel passage and fluidly coupled to the inner nozzle; a second air passage in annular arrangement about the first air passage and fluidly coupled to the inner nozzle; a second fuel passage fluidly coupled to the outer nozzle; a third air passage fluidly coupled to the outer nozzle and in annular arrangement within the second fuel passage; a fourth air passage fluidly coupled to the outer nozzle and in annular arrangement about the second fuel passage; a first set of air conduits in annular arrangement about the body interior of the outer nozzle and fluidly coupled to the outer nozzle; and a second set of air conduits in annular arrangement about the body exterior of the outer nozzle and fluidly coupled to the outer nozzle.

The injector of any preceding clause, further comprising a first air passage in annular arrangement about the first fuel passage and fluidly coupled to the inner nozzle.

The injector of any preceding clause, wherein the first air passage further comprises a first constant cross-sectional area portion and a first converging portion extending from the first constant cross-sectional area portion.

The injector of any preceding clause, wherein the first air passage is configured to provide a first mixture of air and inert gas to the inner nozzle.

The injector of any preceding clause, further comprising a second air passage in annular arrangement about the first air passage and fluidly coupled to the inner nozzle.

The injector of any preceding clause, wherein the second air passage further comprises a second constant cross-sectional area portion and a second converging portion extending from the second constant cross-sectional area portion.

The injector of any preceding clause, wherein the second air passage terminates at a same axial position as the first air passage, relative to the injector axis.

The injector of any preceding clause, further comprising a first swirler provided in the first air passage and a second swirler provided in the second air passage.

The injector of any preceding clause, wherein the first swirler is arranged to swirl a first supply of air in a first direction, wherein the second swirler is arranged to swirl a second supply of air in the first direction, and wherein the first direction extends in a circumferential direction about the injector axis.

The injector of any preceding clause, further comprising a first fuel swirler provided within the first fuel passage, wherein the first fuel swirler swirls a first supply of fuel in a second direction in a circumferential direction about the injector axis opposite of the first direction.

The injector of any preceding clause, wherein the second air passage is configured to provide a second mixture of air and inert gas to the inner nozzle.

The injector of any preceding clause, wherein the first set of air conduits are arranged at a first angle relative to the outer nozzle in an axial direction defined parallel to the injector axis, and wherein the first angle is greater than or equal to 10 degrees (10°) and less than 90 degrees (90°).

The injector of any preceding clause, wherein the second set of air conduits are arranged at a second angle relative to the outer nozzle in the axial direction, and wherein the first angle is greater than or equal to 10 degrees (10°) and less than 90 degrees (90°).

The injector of any preceding clause, wherein the first set of air conduits are arranged at a third angle relative to a radial axis extending from the injector axis, and wherein the first angle is greater than or equal to 1 degree (1°) and less than 90 degrees (90°).

The injector of any preceding clause, wherein the second set of air conduits are arranged at a fourth angle relative to the radial axis, and wherein the first angle is greater than or equal to 1 degree (1°) and less than 90 degrees (90°).

The injector of any preceding clause, further comprising a heat exchanger fluidly coupled to the first fuel passage.

The injector of any preceding clause, wherein the heat exchanger is configured to convert a liquid hydrogen fuel to a gaseous hydrogen fuel.

The injector of any preceding clause, wherein the first fuel passage is coupled to an upstream conduit having a first portion with the heat exchanger and a first valve.

The injector of any preceding clause, wherein the upstream conduit has a second portion with a second valve bypassing the heat exchanger.

The injector of any preceding clause, further comprising a heater positioned within the first fuel passage.

The injector of any preceding clause, wherein the second fuel passage is arranged as a set of second fuel passages in annular arrangement about the body.

The injector of any preceding clause, wherein the first fuel passage supplies a gaseous hydrogen fuel and wherein the second fuel passage supplies a liquid hydrogen fuel.

The injector of any preceding clause, further comprising a first set of inert gas conduits fluidly coupled to the outer nozzle.

The injector of any preceding clause, wherein the first set of inert gas conduits is arranged interior of the outer nozzle and positioned forward of the first set of air conduits.

The injector of any preceding clause, further comprising a second set of inert gas conduits fluidly coupled to the outer nozzle.

The injector of any preceding clause, wherein the second set of inert gas conduits is arranged exterior of the outer nozzle and positioned forward of the second set of air conduits.

The injector of any preceding clause, wherein the outer nozzle is defined between an inner wall and an outer wall, and wherein the first set of inert gas conduits extend through the inner wall and the second set of inert gas conduits extend through the outer wall.

The injector of any preceding clause, wherein the first set of inert gas conduits and the second set of inert gas conduits are oriented at an angle relative to the injector axis, and wherein the angle for the first set of inert gas conduits is the same as an angle for the first set of air conduits and the angle for the second set of inert gas conduits is the same as an angle for the second set of air conduits.

The injector of any preceding clause, wherein the body is a deflector wall.

The injector of any preceding clause, wherein the outer nozzle is defined between an inner wall spaced from an outer wall in annular arrangement about the inner wall; wherein an inner diameter for the outer nozzle is defined as the diameter of the inner wall; wherein an outer diameter for the outer nozzle is defined as the diameter of the outer wall; wherein an axial length for the outer nozzle is defined as the length between the second fuel passage and the second outlet; wherein when outer nozzle is sized such that the inner diameter divided by the outer diameter is greater than or equal to 0.05 and less than or equal to 0.65, that the axial length divided by the outer diameter is greater than or equal to 0 and less than or equal to 1.5.

**EP 4 711 674 A1**

The injector of any preceding clause, wherein when the outer nozzle is sized such that the inner diameter divided by the outer diameter is greater than 0.65 and less than or equal to 0.95, the axial length divided by the outer diameter is greater than or equal to zero and less than or equal to a value determined by the following expression: $\frac{L}{Do} = \left(10.5 \; x \; \frac{Di}{Do}\right) - 5.3$ , wherein L represents the axial length, Do represents the outer diameter, and Di represents the inner diameter.

A turbine engine including a compression section, combustion section, and turbine section is serial flow arrangement, the turbine engine comprising: an injector comprising a body; an inner nozzle provided within the body, exhausting at a first outlet, and defining an injector axis; an outer nozzle provided within the body in annular arrangement about the inner nozzle and exhausting at a second outlet; a first fuel passage fluidly coupled to the inner nozzle and arranged along the injector axis; a second fuel passage fluidly coupled to the outer nozzle; a first set of air conduits in annular arrangement about the body, interior of the outer nozzle and fluidly coupled to the outer nozzle; and a second set of air conduits in annular arrangement about the body, exterior of the outer nozzle and fluidly coupled to the outer nozzle.

The turbine engine of any preceding clause, further comprising a first air passage in annular arrangement about the first fuel passage and fluidly coupled to the inner nozzle.

The turbine engine of any preceding clause, wherein the first air passage is coaxial with the first fuel passage.

The turbine engine of any preceding clause, wherein the first air passage further comprises a first constant cross-sectional area portion and a first converging portion extending from the first constant cross-sectional area portion.

The turbine engine of any preceding clause, wherein the first air passage terminates aft of the first fuel passage.

The turbine engine of any preceding clause, wherein the first air passage is configured to provide a first mixture of air and inert gas to the inner nozzle.

The turbine engine of any preceding clause, further comprising a second air passage in annular arrangement about the first air passage and fluidly coupled to the inner nozzle.

The turbine engine of any preceding clause, wherein the second air passage is coaxial with the first air passage and the first fuel passage.

The turbine engine of any preceding clause, wherein the second air passage further comprises a second constant cross-sectional area portion and a second converging portion extending from the second constant cross-sectional area portion.

The turbine engine of any preceding clause, wherein the second air passage terminates at a same axial position as the first air passage, relative to the injector axis.

The turbine engine of any preceding clause, further comprising a first swirler provided in the first air passage and a second swirler provided in the second air passage.

The turbine engine of any preceding clause, wherein the first swirler is arranged to swirl a first supply of air in a first direction, wherein the second swirler is arranged to swirl a second supply of air in the first direction, and wherein the first direction extends in a circumferential direction about the injector axis.

The turbine engine of any preceding clause, further comprising a first fuel swirler provided within the first fuel passage, wherein the first fuel swirler swirls a first supply of fuel in a second direction in a circumferential direction about the injector axis opposite of the first direction.

The turbine engine of any preceding clause, wherein the second air passage is configured to provide a second mixture of air and inert gas to the inner nozzle.

The turbine engine of any preceding clause, further comprising a third air passage fluidly coupled to the outer nozzle and in annular arrangement interior of the second fuel passage.

The turbine engine of any preceding clause, wherein the third air passage is coaxial with the second fuel passage.

The turbine engine of any preceding clause, wherein the third air passage fluidly couples to the outer nozzle forward of the first set of air conduits.

The turbine engine of any preceding clause, wherein the third air passage is configured to provide a first supply of inert gas to the outer nozzle.

The turbine engine of any preceding clause, further comprising a fourth air passage fluidly coupled to the outer nozzle and in annular arrangement about the second fuel passage.

The turbine engine of any preceding clause, wherein the fourth air passage is coaxial with the second fuel passage.

The turbine engine of any preceding clause, wherein the fourth air passage fluidly couples to the outer nozzle forward of the second set of air conduits.

The turbine engine of any preceding clause, wherein the fourth air passage is configured to provide a second supply of inert gas to the outer nozzle.

The turbine engine of any preceding clause, wherein the first set of air conduits are arranged at a first angle relative to the outer nozzle in an axial direction defined parallel to the injector axis, and wherein the first angle is greater than or equal to 10 degrees (10°) and less than 90 degrees (90°).

17

The turbine engine of any preceding clause, wherein the second set of air conduits are arranged at a second angle relative to the outer nozzle in the axial direction, and wherein the first angle is greater than or equal to 10 degrees (10°) and less than 90 degrees (90°).

The turbine engine of any preceding clause, wherein the first set of air conduits are arranged at a third angle relative to a radial axis extending from the injector axis, and wherein the first angle is greater than or equal to 1 degree (1°) and less than 90 degrees (90°).

The turbine engine of any preceding clause, wherein the second set of air conduits are arranged at a fourth angle relative to the radial axis, and wherein the first angle is greater than or equal to 1 degree (1°) and less than 90 degrees (90°).

The turbine engine of any preceding clause, further comprising a heat exchanger fluidly coupled to the first fuel passage.

The turbine engine of any preceding clause, wherein the heat exchanger is configured to convert a liquid hydrogen fuel to a gaseous hydrogen fuel.

The turbine engine of any preceding clause, wherein the first fuel passage is coupled to an upstream conduit having a first portion with the heat exchanger and a first valve.

The turbine engine of any preceding clause, wherein the upstream conduit has a second portion with a second valve bypassing the heat exchanger.

The turbine engine of any preceding clause, further comprising a heater positioned within the first fuel passage.

The turbine engine of any preceding clause, wherein the second fuel passage is arranged as a set of second fuel passages in annular arrangement about the body.

The turbine engine of any preceding clause, wherein the first fuel passage supplies a gaseous hydrogen fuel and wherein the second fuel passage supplies a liquid hydrogen fuel.

The turbine engine of any preceding clause, further comprising a first set of inert gas conduits fluidly coupled to the outer nozzle.

The turbine engine of any preceding clause, wherein the first set of inert gas conduits is arranged interior of the outer nozzle and positioned forward of the first set of air conduits.

The turbine engine of any preceding clause, further comprising a second set of inert gas conduits fluidly coupled to the outer nozzle.

The turbine engine of any preceding clause, wherein the second set of inert gas conduits is arranged exterior of the outer nozzle and positioned forward of the second set of air conduits.

The turbine engine of any preceding clause, wherein the outer nozzle is defined between an inner wall and an outer wall, and wherein the first set of inert gas conduits extend through the inner wall and the second set of inert gas conduits extend through the outer wall.

The turbine engine of any preceding clause, wherein the first set of inert gas conduits and the second set of inert gas conduits are oriented at an angle relative to the injector axis, and wherein the angle for the first set of inert gas conduits is the same as an angle for the first set of air conduits and the angle for the second set of inert gas conduits is the same as an angle for the second set of air conduits.

The turbine engine of any preceding clause, wherein the first set of air conduits are configured to provide a first mixture of air and inert gas to the outer nozzle.

The turbine engine of any preceding clause, wherein the second set of air conduits are configured to provide a second mixture of air and inert gas to the outer nozzle.

The turbine engine of any preceding clause, wherein the second fuel passage is configured to supply a mixture of hydrogen and inert gas.

The turbine engine of any preceding clause, wherein the mixture of hydrogen and inert gas is a mixture of liquid hydrogen and inert gas.

The turbine engine of any preceding clause, wherein the first fuel passage is configured to supply a mixture of hydrogen and inert gas.

The turbine engine of any preceding clause, wherein the mixture of hydrogen and inert gas is a mixture of gaseous hydrogen and inert gas.

The turbine engine of any preceding clause, wherein the body is a deflector wall.

The turbine engine of any preceding clause, wherein the outer nozzle is defined between an inner wall spaced from an outer wall in annular arrangement about the inner wall; wherein an inner diameter for the outer nozzle is defined as the diameter of the inner wall; wherein an outer diameter for the outer nozzle is defined as the diameter of the outer wall; wherein an axial length for the outer nozzle is defined as the length between the second fuel passage and the second outlet; wherein when outer nozzle is sized such that the inner diameter divided by the outer diameter is greater than or equal to 0.05 and less than or equal to 0.65, that the axial length divided by the outer diameter is greater than or equal to 0 and less than or equal to 1.5.

The turbine engine of any preceding clause, wherein when the outer nozzle is sized such that the inner diameter divided by the outer diameter is greater than 0.65 and less than or equal to 0.95, the axial length divided by the outer diameter is greater than or equal to zero and less than or equal to a value determined by the following expression:

$$\frac{L}{Do} = \left(10.5 \; x \; \frac{Di}{Do}\right) - 5.3$$, wherein L represents the axial length, Do represents the outer diameter, and Di represents the inner diameter.

The turbine engine of any preceding clause, further comprising: a first air passage in annular arrangement about the first fuel passage and fluidly coupled to the inner nozzle; a second air passage in annular arrangement about the first air passage and fluidly coupled to the inner nozzle; a third air passage fluidly coupled to the outer nozzle and in annular arrangement within the second fuel passage; and a fourth air passage fluidly coupled to the outer nozzle and in annular arrangement about the second fuel passage.

A method of injecting fuel to a combustor of a turbine engine with an injector, the method comprising: providing a supply of hydrogen fuel from an outer nozzle in annular arrangement about the inner nozzle; providing a first supply of air to the outer nozzle from a first set of conduits; providing a second supply of air to the outer nozzle from a second set of conduits.

The method of any preceding clause, further comprising providing a supply of hydrogen fuel from a first fuel passage to an inner nozzle.

The method of any preceding clause, further comprising varying a temperature of the supply of hydrogen fuel from the first fuel passage prior to entry to the inner nozzle.

The method of any preceding clause, further comprising varying a temperature of temperature of the supply of hydrogen fuel provided to the inner nozzle from the first fuel passage.

The method of any preceding clause, further comprising providing a third supply of air from a first air passage to the inner nozzle.

The method of any preceding clause, further comprising providing a fourth supply of air from a second air passage to the inner nozzle.

The method of any preceding clause, further comprising providing a fifth supply of air from a third air passage to the outer nozzle.

The method of any preceding clause, further comprising providing a sixth supply of air from a fourth air passage to the outer nozzle.

The method of any preceding clause, wherein the supply of hydrogen fuel provided to the outer nozzle is provided from a first fuel passage.

The method of any preceding clause, wherein the third air passage and the fourth air passage are coaxial with the first fuel passage.

The method of any preceding clause, further comprising providing a supply of inert gas to the outer nozzle.

The method of any preceding clause, wherein the supply of inert gas is provided from at least one of a first set of inert gas conduits to the outer nozzle or a second set of inert gas conduits to the outer nozzle.

The method of any preceding clause, wherein the supply of inert gas is provided from both the first set of inert gas conduits and the second set of inert gas conduits.

The method of any preceding clause, wherein the first set of inert gas conduits are arranged forward of the first set of air conduits and the second set of inert gas conduits are arranged forward of the second set of air conduits.

The method of any preceding clause, further comprising varying a temperature of the supply of hydrogen fuel.

The method of any preceding clause, wherein a heat exchanger or heater varies the temperature of the supply of hydrogen fuel prior to provision to the outer nozzle.

An injector for a turbine engine comprising a compression section, combustion section, and turbine section is serial flow arrangement, the injector comprising: a body; an inner nozzle provided within the body, exhausting at a first outlet, and defining an injector axis; an outer nozzle provided within the body in annular arrangement about the inner nozzle and exhausting at a second outlet; a first fuel passage fluidly coupled to the inner nozzle and arranged along the injector axis; a second fuel passage fluidly coupled to the outer nozzle; a first set of air conduits in annular arrangement about the body, interior of the outer nozzle and fluidly coupled to the outer nozzle; and a second set of air conduits in annular arrangement about the body, exterior of the outer nozzle and fluidly coupled to the outer nozzle.

The injector of any preceding clause, further comprising a first air passage fluidly coupled to the outer nozzle and in annular arrangement interior of the second fuel passage.

The injector of any preceding clause, further comprising a second air passage fluidly coupled to the outer nozzle and in annular arrangement exterior of the second fuel passage.

The injector of any preceding clause, wherein the first air passage and the second air passage are coaxial with the second fuel passage.

The injector of any preceding clause, wherein the first air passage and the second air passage fluidly couple to the outer nozzle forward of the first set of air conduits and the second set of air conduits.

The injector of any preceding clause, wherein the first set of air conduits are arranged at a first angle relative to the outer nozzle in an axial direction defined parallel to the injector axis, and wherein the first angle is greater than or equal to 10 degrees (10°) and less than 90 degrees (90°).

The injector of any preceding clause, wherein the second set of air conduits are arranged at a second angle relative to the outer nozzle in the axial direction, and wherein the second angle is greater than or equal to 10 degrees (10°) and less than 90 degrees (90°).

The injector of any preceding clause, wherein the first set of air conduits are arranged at a third angle relative to a radial axis extending from the injector axis, and wherein the third angle is greater than or equal to 1 degree (1°) and less than 90 degrees (90°).

The injector of any preceding clause, wherein the second set of air conduits are arranged at a fourth angle relative to the radial axis, and wherein the fourth angle is greater than or equal to 1 degree (1°) and less than 90 degrees (90°).

The injector of any preceding clause, further comprising a heat exchanger fluidly coupled to the first fuel passage.

The injector of any preceding clause, wherein the heat exchanger is configured to convert a liquid hydrogen fuel to a gaseous hydrogen fuel.

The injector of any preceding clause, wherein the second fuel passage is arranged as a set of second fuel passages in annular arrangement about the outer nozzle.

The injector of any preceding clause, wherein the first fuel passage supplies a gaseous hydrogen fuel and wherein the second fuel passage supplies a liquid hydrogen fuel.

The injector of any preceding clause, further comprising a first set of inert gas conduits fluidly coupled to the outer nozzle.

The injector of any preceding clause, further comprising a second set of inert gas conduits fluidly coupled to the outer nozzle.

The injector of any preceding clause, wherein the first set of inert gas conduits are positioned radially interior of the outer nozzle and the second set of inert gas conduits are positioned radially exterior of the outer nozzle.

The injector of any preceding clause, wherein the first set of inert gas conduits and the second set of inert gas conduits are oriented at an angle relative to the injector axis, and wherein the angle for the first set of inert gas conduits is the same as an angle for the first set of air conduits and the angle for the second set of inert gas conduits is the same as an angle for the second set of air conduits.

The injector of any preceding clause, wherein the outer nozzle is defined between an inner wall spaced from an outer wall in annular arrangement about the inner wall; wherein an inner diameter for the outer nozzle is defined as a diameter of the inner wall at the second outlet; wherein an outer diameter for the outer nozzle is defined as a diameter of the outer wall at the second outlet; wherein an axial length for the outer nozzle is defined as the length between the second fuel passage and the second outlet; and wherein when the outer nozzle is sized such that the inner diameter divided by the outer diameter is greater than or equal to 0.05 and less than or equal to 0.65, that the axial length divided by the outer diameter is greater than or equal to 0 and less than or equal to 1.5.

The injector of any preceding clause, wherein when the outer nozzle is sized such that the inner diameter divided by the outer diameter is greater than 0.65 and less than or equal to 0.95, the axial length divided by the outer diameter is greater than or equal to zero and less than or equal to a value determined by the following expression:

$$\frac{L}{Do} = \left(10.5 \ x \ \frac{Di}{Do}\right) - 5.3,$$

wherein *L* represents the axial length, *Do* represents the outer diameter, and *Di* represents the inner diameter.

The injector of any preceding clause, further comprising: a first air passage in annular arrangement about the first fuel passage and fluidly coupled to the inner nozzle; a second air passage in annular arrangement about the first air passage and fluidly coupled to the inner nozzle; a third air passage fluidly coupled to the outer nozzle and in annular arrangement within the second fuel passage; and a fourth air passage fluidly coupled to the outer nozzle and in annular arrangement about the second fuel passage.

**Claims**

1. An injector (100) for a turbine engine (10) comprising a compression section (12), combustion section (14), and turbine section (16) is serial flow arrangement, the injector (100) comprising:

    a body (114);
    an inner nozzle (102) provided within the body (114), exhausting at a first outlet (108), and defining an injector axis (112);
    an outer nozzle (104) provided within the body (114) in annular arrangement about the inner nozzle (102) and exhausting at a second outlet (110);

a first fuel passage (120) fluidly coupled to the inner nozzle (102) and arranged along the injector axis (112);
a second fuel passage (164) fluidly coupled to the outer nozzle (104);
a first set of air conduits (174) in annular arrangement about the body (114), interior of the outer nozzle (104) and fluidly coupled to the outer nozzle (104); and
a second set of air conduits (176) in annular arrangement about the body (114), exterior of the outer nozzle (104) and fluidly coupled to the outer nozzle (104).

2. The injector (100) of claim 1, further comprising a first air passage (166) fluidly coupled to the outer nozzle (104) and in annular arrangement interior of the second fuel passage (164).

3. The injector (100) of claim 2, further comprising a second air passage (168) fluidly coupled to the outer nozzle (104) and in annular arrangement exterior of the second fuel passage (164).

4. The injector (100) of claim 3, wherein the first air passage (166) and the second air passage (168) are coaxial with the second fuel passage (164).

5. The injector (100) of claim 3 or 4, wherein the first air passage (166) and the second air passage (168) fluidly couple to the outer nozzle (104) forward of the first set of air conduits (174) and the second set of air conduits (176).

6. The injector (100) of any preceding claim, wherein the first set of air conduits (174) are arranged at a first angle (178) relative to the outer nozzle (104) in an axial direction defined parallel to the injector axis (112), and wherein the first angle (178) is greater than or equal to 10 degrees (10°) and less 90 degrees (90°).

7. The injector (100) of claim 6, wherein the second set of air conduits (176) are arranged at a second angle (180) relative to the outer nozzle (104) in the axial direction, and wherein the second angle (178) is greater than or equal to 10 degrees (10°) and less than 90 degrees (90°).

8. The injector (100) of claim 7, wherein the first set of air conduits (174) are arranged at a third angle (182) relative to a radial axis (186) extending from the injector axis (112), and wherein the third angle (182) is greater than or equal to 1 degree (1°) and less than 90 degrees (90°).

9. The injector (100) of claim 8, wherein the second set of air conduits (176) are arranged at a fourth angle relative to the radial axis (186), and wherein the fourth angle (184) is greater than or equal to 1 degree (1°) and less than 90 degrees (90°).

10. The injector (100) of any preceding claim, further comprising a heat exchanger (206) fluidly coupled to the first fuel passage (120).

11. The injector (100) of claim 10, wherein the heat exchanger (206) is configured to convert a liquid hydrogen fuel to a gaseous hydrogen fuel.

12. The injector (100) of any preceding claim, wherein the second fuel passage (164) is arranged as a set of second fuel passages (404) in annular arrangement about the outer nozzle (104).

13. The injector (100) of any preceding claim, wherein the first fuel passage (120) supplies a gaseous hydrogen fuel and wherein the second fuel passage (164) supplies a liquid hydrogen fuel.

14. The injector (100) of any preceding claim, further comprising a first set of inert gas conduits (504) fluidly coupled to the outer nozzle (104) .

15. The injector (100) of claim 14, further comprising a second set of inert gas conduits (508) fluidly coupled to the outer nozzle (104); and
wherein the first set of inert gas conduits (504) are positioned radially interior of the outer nozzle (104) and the second set of inert gas conduits (508) are positioned radially exterior of the outer nozzle (104).

FIG. 1

**FIG. 2**

FIG. 3

EP 4 711 674 A1

**FIG. 4**

FIG. 5

FIG. 6

FIG. 7

FIG. 8

FIG. 9

FIG. 10

FIG. 11

650    652

MFI ⟶                    ⟵ 654

**FIG. 12**

FIG. 13

750

MAI2

MAI1

756

752

754

758

**FIG. 14**

FIG. 15

Europäisches
Patentamt

European
Patent Office

Office européen
des brevets

# EUROPEAN SEARCH REPORT

**Application Number**

**EP 25 19 5928**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | AU 2021 257 969 B2 (GEN ELECTRIC [US]) 1 June 2023 (2023-06-01) | 1-9,12, 13 | INV. F23R3/28 |
| Y | * paragraph [0042] - paragraph [0066]; figures * ----- | 10,11, 14,15 | |
| Y | AU 2021 221 937 A1 (GEN ELECTRIC [US]) 19 January 2023 (2023-01-19) * paragraph [0035]; figures * ----- | 10,11 | |
| Y | EP 3 978 737 B1 (ROLLS ROYCE PLC [GB]) 17 April 2024 (2024-04-17) * paragraph [0012] - paragraph [0017] * ----- | 10,11 | |
| Y | EP 2 251 604 A1 (GEN ELECTRIC [US]) 17 November 2010 (2010-11-17) * paragraph [0018] - paragraph [0019]; figures * ----- | 14,15 | |
| Y | US 2010/212323 A1 (MARTIN SCOTT M [US]) 26 August 2010 (2010-08-26) * paragraph [0004]; figures * ----- | 14,15 | |
| Y | EP 2 221 541 A2 (GEN ELECTRIC [US]) 25 August 2010 (2010-08-25) * paragraph [0014] - paragraph [0015]; figures * ----- | 14,15 | TECHNICAL FIELDS SEARCHED (IPC) F23R |
| A | US 2014/083100 A1 (CUNHA FRANK J [US] ET AL) 27 March 2014 (2014-03-27) * the whole document * ----- | 1-5 | |

The present search report has been drawn up for all claims

| Place of search | Date of completion of the search | Examiner |
|---|---|---|
| The Hague | 27 January 2026 | Oliveira, Casimiro |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

                                                 
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 19 5928

This annex lists the patent family members relating to the patent documents cited in the above-mentioned European search report.
The members are as contained in the European Patent Office EDP file on
The European Patent Office is in no way liable for these particulars which are merely given for the purpose of information.

27-01-2026

| Patent document cited in search report | | | Publication date | Patent family member(s) | | Publication date |
|---|---|---|---|---|---|---|
| AU | 2021257969 | B2 | 01-06-2023 | AU | 2020200838 A1 | 03-09-2020 |
| | | | | AU | 2021257969 A1 | 25-11-2021 |
| | | | | CN | 111578311 A | 25-08-2020 |
| | | | | GB | 2583819 A | 11-11-2020 |
| | | | | US | 2020263873 A1 | 20-08-2020 |
| AU | 2021221937 | A1 | 19-01-2023 | AU | 2021221937 A1 | 19-01-2023 |
| | | | | AU | 2023278050 A1 | 04-01-2024 |
| | | | | CN | 115523509 A | 27-12-2022 |
| | | | | CN | 118224617 A | 21-06-2024 |
| | | | | GB | 2608196 A | 28-12-2022 |
| | | | | GB | 2630427 A | 27-11-2024 |
| | | | | KR | 20230000387 A | 02-01-2023 |
| | | | | KR | 20230128247 A | 04-09-2023 |
| | | | | US | 2022412563 A1 | 29-12-2022 |
| | | | | US | 2024102656 A1 | 28-03-2024 |
| EP | 3978737 | B1 | 17-04-2024 | EP | 3978736 A1 | 06-04-2022 |
| | | | | EP | 3978737 A1 | 06-04-2022 |
| | | | | EP | 3978738 A1 | 06-04-2022 |
| | | | | EP | 3978807 A2 | 06-04-2022 |
| | | | | EP | 3988845 A2 | 27-04-2022 |
| | | | | EP | 4350138 A2 | 10-04-2024 |
| | | | | US | 2022099020 A1 | 31-03-2022 |
| | | | | US | 2022099025 A1 | 31-03-2022 |
| | | | | US | 2022099028 A1 | 31-03-2022 |
| | | | | US | 2022099299 A1 | 31-03-2022 |
| | | | | US | 2022178307 A1 | 09-06-2022 |
| EP | 2251604 | A1 | 17-11-2010 | CN | 101881454 A | 10-11-2010 |
| | | | | EP | 2251604 A1 | 17-11-2010 |
| | | | | JP | 2010261697 A | 18-11-2010 |
| | | | | US | 2010281876 A1 | 11-11-2010 |
| US | 2010212323 | A1 | 26-08-2010 | NONE | | |
| EP | 2221541 | A2 | 25-08-2010 | CN | 101813315 A | 25-08-2010 |
| | | | | EP | 2221541 A2 | 25-08-2010 |
| | | | | JP | 2010197039 A | 09-09-2010 |
| | | | | US | 2010212322 A1 | 26-08-2010 |
| US | 2014083100 | A1 | 27-03-2014 | EP | 2900977 A1 | 05-08-2015 |
| | | | | US | 2014083100 A1 | 27-03-2014 |
| | | | | WO | 2014052632 A1 | 03-04-2014 |

EPO FORM P0459

For more details about this annex : see Official Journal of the European Patent Office, No. 12/82